# EUROPEAN PATENT APPLICATION

(11) **EP 4 832 370 A1**
(43) Date of publication of application: **28.10.2026**
(21) Application number: 25738326.5
(22) Date of filing: 03.01.2025
(51) Int. Cl.: H04B 7/06

(54) **COMMUNICATION METHOD, APPARATUS, AND STORAGE MEDIUM**

(30) Priority: 12.01.2024 CN 202410054093
(71) Applicant: Huawei Technologies Co., Ltd., Shenzhen, Guangdong 518129 (CN)
(72) Inventor: YAN, Mao, Shenzhen, Guangdong 518129 (CN); WANG, Xiaona, Shenzhen, Guangdong 518129 (CN); LIU, Fengwei, Shenzhen, Guangdong 518129 (CN)
(74) Representative: Thun, Clemens
(86) International application number: PCT/CN2025/070404
(87) International publication number: WO 2025/148795

(57) **Abstract**

A communication method and apparatus, and a storage medium are provided, relating to the field of communication technologies. The solution enables a first apparatus to obtain channel information based on a plurality of reference signals. This solution reduces a quantity of reference signals delivered by a second apparatus, thereby reducing resource overhead. In this application, the first apparatus receives a first reference signal and a second reference signal. The first reference signal corresponds to a first port set, and the second reference signal corresponds to a second port set. The first port set includes at least one antenna port, and the second port set includes at least one antenna port. The first apparatus sends the channel information, where the channel information is determined based on the first reference signal sent through the first port set and the second reference signal sent through the second port set. Because the first apparatus obtains channel information based on the plurality of reference signals, this solution reduces the quantity of reference signals delivered by the second apparatus, thereby reducing resource overhead.

## Description

### CROSS-REFERENCE TO RELATED APPLICATIONS

This application claims priority to Chinese Patent Application No. 202410054093.X, filed with the China National Intellectual Property Administration on January 12, 2024 and entitled "COMMUNICATION METHOD AND APPARATUS, AND STORAGE MEDIUM", which is incorporated herein by reference in its entirety.

### TECHNICAL FIELD

This application relates to the field of communication technologies, and in particular, to a communication method and apparatus, and a storage medium.

### BACKGROUND

Multiple-input multiple-output (multiple-input multiple-output, MIMO) technology, as a key technique in wireless communications, can be used to meet high-rate transmission requirements. During channel measurement (or channel estimation), a network device may calculate precoding information between the network device and a terminal device by using channel information obtained in the channel measurement process. Subsequently, MIMO communication can be implemented between the network device and the terminal device based on the precoding information.

Using the downlink channel measurement process as an example the network device sends downlink reference signals, which may include channel state information reference signals (channel state information reference signals, CSI-RSs). The network device receives feedback for the CSI-RSs, thereby obtaining channel information based on the feedback. Currently, the network device may separately send CSI-RSs on different time domain resources, and the terminal device separately feeds back, for each CSI-RS, channel information corresponding to the CSI-RS. As a quantity of beams increases, a quantity of CSI-RSs that need to be sent by the network device also increases, resulting in significant resource consumption by reference signals.

### SUMMARY

This application provides a communication method and apparatus, and a storage medium, enabling a first apparatus to obtain channel information based on a plurality of reference signals. This solution reduces a quantity of reference signals delivered by a second apparatus, thereby reducing resource overhead.

According to a first aspect, this application provides a communication method. The method is performed by a first apparatus. The first apparatus may be a terminal apparatus, or may be a network apparatus. The terminal apparatus in this application may be a terminal device or a chip (or a chip system) in the terminal device. The network apparatus in this application may be a network device or a chip (or a chip system) in the network device.

In the method, the first apparatus receives a first reference signal and a second reference signal. The first reference signal corresponds to a first port set. For example, the second apparatus sends the first reference signal through the first port set. The second reference signal corresponds to a second port set. For example, the second apparatus sends the second reference signal through the second port set. The first port set includes at least one antenna port, and the second port set includes at least one antenna port. The first apparatus sends the channel information. The channel information is determined based on the reference signal sent through the first port set and the reference signal sent through the second port set. For example, the channel information is determined based on the first reference signal sent through the first port set and the second reference signal sent through the second port set. It may also be understood as the channel information.

It can be learned that, the first apparatus may obtain the channel information based on the two reference signals. Therefore, in this solution, the first apparatus may also feed back more channel information when the second apparatus sends fewer reference signals. This solution reduces the quantity of reference signals delivered by the first apparatus, thereby reducing the resource overhead.

To further describe beneficial effects brought by this application, the following describes a possible example. In this example, an example in which the second apparatus includes two port sets is used for description. During actual application, the second apparatus may include more or fewer port sets. The second apparatus sends the first reference signal through the two port sets, and each port set sends the first reference signal by using a beam B#0. The second apparatus sends the second reference signal through the two port sets, and each port set sends the first reference signal by using a beam B#1. The first reference signal and the second reference signal may be sent in a frequency division manner, a time division manner, or the like. In a possible implementation provided in this application, the first apparatus may not only feed back channel information corresponding to the first reference signal (the channel information may reflect corresponding channel information when the two port sets use the beam B#0), but also feed back channel information corresponding to the second reference signal (the channel information may reflect corresponding channel information when the two port sets use the beam B#1). In addition, in a possible implementation provided in this application, the first apparatus may feed back channel information corresponding to the first reference signal and the second reference signal. The channel information may feed back corresponding channel information when one of the two port sets uses the beam B#0 and the other of the two port sets uses the beam B#1. It can be learned that, in this solution, the first apparatus may feed back channel information corresponding to a combination form of the beam B#0 and the beam B#1 without a need for the second apparatus to deliver a new reference signal (the new reference signal is sent through two ports, one port set uses the beam B#0, and the other port set uses the beam B#1). Therefore, in the solution provided in this application, the quantity of reference signals sent by the second apparatus can be reduced, thereby reducing the resource overhead.

In this application, one reference signal may correspond to a resource of one reference signal. In this application, the first apparatus may obtain one piece of channel information based on one reference signal. This implementation may also be understood as: The first apparatus obtains one piece of channel information based on a resource of one reference signal. In this application, the first apparatus may alternatively obtain one piece of channel information based on a plurality of reference signals. This implementation may also be understood as: The first apparatus obtains one piece of channel information based on resources of a plurality of reference signals.

In a possible implementation of the first aspect, the first port set belongs to N_{g1} port sets, and N_{g1} is a positive integer. That the first reference signal corresponds to the N_{g1} port sets may also be understood as: The second apparatus sends the first reference signal through the N_{g1} port sets. The second port set belongs to N_{g2} port sets, and N_{g2} is a positive integer. That the second reference signal corresponds to the N_{g2} port sets may also be understood as: The second apparatus sends the second reference signal through the N_{g2} port sets. N_{g1} may be equal to 1 or may be greater than 1. N_{g2} may be equal to 1 or may be greater than 1. In a possible implementation, N_{g1} is an integer greater than 1, and/or N_{g2} is an integer greater than 1.

According to a second aspect, this application provides a communication method. The method is performed by a first apparatus. The first apparatus may be a terminal apparatus, or may be a network apparatus. The terminal apparatus in this application may be a terminal device or a chip (or a chip system) in the terminal device. The network apparatus in this application may be a network device or a chip (or a chip system) in the network device.

In the method, the first apparatus receives a first reference signal and a second reference signal. The first reference signal corresponds to N_{g1} port sets, N_{g1} is a positive integer, and a port set in the N_{g1} port sets includes at least one antenna port. The second reference signal corresponds to N_{g2} port sets, N_{g2} is a positive integer, and a port set in the N_{g2} port sets includes at least one antenna port. The first apparatus sends channel information. The channel information is determined based on the first reference signal sent through a first port set and the second reference signal sent through a second port set. The first port set belongs to the N_{g1} port sets, and the second port set belongs to the N_{g2} port sets. N_{g1} may be equal to 1 or may be greater than 1. N_{g2} may be equal to 1 or may be greater than 1. In a possible implementation, N_{g1} is an integer greater than 1, and/or N_{g2} is an integer greater than 1.

It can be learned that, the first apparatus may obtain the channel information based on the two reference signals. Therefore, in this solution, the first apparatus may also feed back more channel information when the second apparatus sends fewer reference signals. This solution reduces the quantity of reference signals delivered by the first apparatus, thereby reducing the resource overhead.

In a possible implementation of the first aspect and/or the second aspect, the channel information sent by the first apparatus is determined based on first channel information and second channel information, the first channel information is determined based on the first reference signal corresponding to the first port set, and the second channel information is determined based on the second reference signal corresponding to the second port set. For example, the first apparatus may obtain the first channel information based on a resource corresponding to the first reference signal and the first port set. The first apparatus obtains the second channel information based on a resource corresponding to the second reference signal and the second port set. The first apparatus determines the channel information based on the first channel information and the second channel information. It can be learned that, in this solution, the first apparatus may respectively obtain a plurality of pieces of channel information based on a plurality of resources, and then combine the channel information corresponding to the plurality of resources, to obtain new channel information. The new channel information may be understood as channel information obtained across the plurality of resources. Because the first apparatus may feed back the channel information across the resources, this solution reduces a quantity of reference signals sent by a second apparatus, thereby reducing resource overhead.

In a possible implementation of the first aspect and/or the second aspect, the channel information sent by the first apparatus may be determined based on the first channel information, the second channel information, and a combining coefficient, and the combining coefficient is determined based on the first reference signal corresponding to the first port set and the second reference signal corresponding to the second port set. For example, the first apparatus may determine the combining coefficient, and combine the first channel information and the second channel information based on the combining coefficient, to obtain the channel information. It may also be understood as that, the channel information needs to be determined based on the first channel information, the second channel information, and the combining coefficient. The combining coefficient is determined based on the first reference signal and the first port set, and the second reference signal and the second port set. The channel information determined based on this can better comply with a real channel status of a cross-resource combination (namely, a combination of resources of different reference signals), thereby improving subsequent communication efficiency.

In a possible implementation of the first aspect and/or the second aspect, the resource corresponding to the first reference signal and the first port set and the resource corresponding to the second reference signal and the second port set may also correspond to different antenna panels. The first apparatus may obtain the channel information based on different reference signals, or it may be understood as that, the first apparatus may obtain one piece of channel information across resources. That is, one piece of channel information is obtained based on a plurality of resources (or a plurality of reference signals). This solution reduces a quantity of reference signals sent by a network apparatus and ensures a quantity of pieces of channel information, thereby reducing resource overhead.

In a possible implementation of the first aspect and/or the second aspect, the first apparatus may further receive (for example, may receive from the second apparatus) configuration information. The configuration information includes indicating to determine the channel information based on the first reference signal and the second reference signal. The first apparatus may send the channel information based on the configuration information. It can be learnt that, the configuration information may indicate channel information of which reference signals that the first apparatus needs to obtain, so that the first apparatus can obtain channel information that better meets requirements of the second apparatus.

In a possible implementation of the first aspect and/or the second aspect, the first apparatus may further determine the configuration information, and further, the first apparatus may further send (for example, send to the second apparatus) the configuration information. The configuration information includes indicating to determine the channel information based on the first reference signal and the second reference signal. In this way, the first apparatus may send, to the second apparatus, determined channel information that has good communication quality, and indicate, to the second apparatus, a reference signal corresponding to the channel information.

In a possible implementation of the first aspect and/or the second aspect, the configuration information may include at least one of the following: indication information of the first port set, indication information of the first reference signal, indication information of the second port set, and indication information of the second reference signal. The information may indicate the reference signal and a port set that correspond to the channel information. Based on this implementation, the first apparatus may determine to determine the channel information at a granularity of the reference signal and a granularity of the port set, so that flexibility of a combination of the reference signal and the port set that correspond to the channel information can be improved.

In a possible implementation of the first aspect and/or the second aspect, the indication information of the first port set includes at least one of the following: an index of the antenna port in the first port set, an index of the first port set, an index of a start antenna port in the first port set, information about a quantity of antenna ports included in the first port set, and an index of an end antenna port in the first port set. Indexes of antenna ports in the first port set may be consecutive or may be inconsecutive. When the antenna ports in the first port set are consecutive, the first apparatus may determine the antenna ports in the first port set based on at least two of the index of the start antenna port in the first port set, the information about the quantity of antenna ports included in the first port set, and the index of the end antenna port in the first port set. At least one piece of the indication information of the first port set may also be preset on the first apparatus, or may be defined in a protocol.

In a possible implementation of the first aspect and/or the second aspect, the indication information of the second port set includes at least one of the following: an index of the antenna port in the second port set, an index of the second port set, an index of a start antenna port in the second port set, information about a quantity of antenna ports included in the second port set, and an index of an end antenna port in the second port set. Indexes of antenna ports in the second port set may be consecutive or may be inconsecutive. When the antenna ports in the second port set are consecutive, the first apparatus may determine the antenna ports in the second port set based on at least two of the index of the start antenna port in the second port set, the information about the quantity of antenna ports included in the second port set, and the index of the end antenna port in the second port set. At least one piece of the indication information of the second port set may also be preset on the first apparatus, or may be defined in a protocol.

In a possible implementation of the first aspect and/or the second aspect, a codebook corresponding to the first port set may be the same as or different from a codebook corresponding to the second port set. A codebook parameter corresponding to the first port set may be the same as or different from a codebook parameter corresponding to the second port set.

Selection of the codebook and the codebook parameter may be flexible. For example, in a possible implementation, the codebook corresponding to the first port set is different from the codebook corresponding to the second port set; and/or the codebook parameter corresponding to the first port set is the same as the codebook parameter corresponding to the second port set.

In a possible implementation of the first aspect and/or the second aspect, the first apparatus may send the channel information in a plurality of sending manners. The first apparatus may select a sending manner corresponding to the channel information to send the channel information. The sending manner may be related to selection of the codebook and/or the codebook parameter.

In a possible implementation, a sending manner of the channel information is associated with a quantity of reference signals corresponding to the channel information. For example, if the quantity of reference signals corresponding to the channel information is 1, the channel information may correspond to a first sending manner. For another example, if the quantity of reference signals corresponding to the channel information is greater than 1, the channel information may correspond to a second sending manner. The quantity of reference signals corresponding to the channel information may be understood as a quantity of reference signals or a quantity of resources of the reference signal based on which the channel information is obtained. In this embodiment of this application, "a quantity of reference signals" may also be replaced with "a quantity of resources of a reference signal", and "a spatial relation corresponding to a reference signal" may also be replaced with "a spatial relation corresponding to a resource of a reference signal".

In another possible implementation, a sending manner of the channel information is associated with a quantity of reference signals corresponding to the channel information and a spatial relation of the reference signals corresponding to the channel information. For example, if the quantity of reference signals corresponding to the channel information is 1, the channel information may correspond to a first sending manner. For another example, if the quantity of reference signals corresponding to the channel information is greater than 1, but spatial relations (or beams) of all reference signals corresponding to the channel information are the same, the channel information may correspond to the first sending manner. For another example, if the quantity of reference signals corresponding to the channel information is greater than 1, but spatial relations of at least two reference signals in spatial relations (or beams) of all reference signals corresponding to the channel information are different, the channel information may correspond to a second sending manner.

In the first sending manner, a codebook and/or a codebook parameter corresponding to the channel information fed back by the terminal apparatus may be determined based on a quantity (for example, a total quantity) of antenna ports corresponding to a resource of the reference signal corresponding to the channel information. If the channel information corresponds to a plurality of port sets, the plurality of port sets may use a same codebook and a same codebook parameter. A codebook parameter of one port set may include, for example, at least one of the following: a quantity of antenna ports in the port set, a non-zero element ratio, a basis selection ratio, and a quantity of bases (for example, a quantity of frequency domain bases).

In the second sending manner, a codebook and/or a codebook parameter corresponding to the channel information fed back by the terminal apparatus may be determined based on a quantity of antenna ports in each port set corresponding to the channel information. For example, a codebook parameter of one port set and a quantity of antenna ports in the port set are in a specific relationship, for example, a proportional relationship. If the channel information corresponds to a plurality of port sets, codebooks corresponding to at least two port sets may be different, and/or codebook parameters corresponding to the at least two port sets may be different. A codebook parameter of one port set may include, for example, at least one of the following: a quantity of antenna ports in the port set, a non-zero element ratio, a basis selection ratio, and a quantity of bases (for example, a quantity of frequency domain bases). For example, the codebook and/or the codebook parameter corresponding to the first port set are/is determined based on the quantity of antenna ports in the first port set. The codebook parameter corresponding to the first port set includes at least one of the following: the quantity of antenna ports in the first port set, and a non-zero element ratio, a basis selection ratio, and a quantity of bases that correspond to the first port set. The codebook and/or the codebook parameter corresponding to the second port set are/is determined based on the quantity of antenna ports in the second port set. The codebook parameter corresponding to the second port set includes at least one of the following: a quantity of antenna ports in the second port set, a non-zero element ratio corresponding to the second port set, and a basis selection ratio and a quantity of bases that correspond to the second port set.

Based on the foregoing solution, the codebook and/or the codebook parameter corresponding to the channel information can be determined more properly.

In a possible implementation of the first aspect and/or the second aspect, a first-level weight W₁ corresponding to at least one of the N_{g1} port sets may be the same as or different from a first-level weight W₁ corresponding to at least one of the N_{g2} port sets. A second-level weight W₂ corresponding to at least one of the N_{g1} port sets may be the same as or different from a second-level weight W₂ corresponding to at least one of the N_{g2} port sets.

For example, a plurality of first-level weights W₁ corresponding to the first port set are the same, a plurality of second-level weights W₂ corresponding to the first port set are the same, at least one first-level weight W₁ corresponding to the first port set is different from at least one first-level weight W₁ corresponding to the second port set, and at least one second-level weight W₂ corresponding to the first port set is different from at least one second-level weight W₂ corresponding to the second port set.

For another example, a plurality of first-level weights W₁ corresponding to the first port set are the same, at least two second-level weights W₂ corresponding to the first port set are different, at least one first-level weight W₁ corresponding to the first port set is different from at least one first-level weight W₁ corresponding to the second port set, and at least one second-level weight W₂ corresponding to the first port set is different from at least one second-level weight W₂ corresponding to the second port set.

It can be learnt from the foregoing content that, the first-level weight W₁ and/or the second-level weight W₂ may be set at a granularity of a port set, or the first-level weight W₁ and/or the second-level weight W₂ may be set at a granularity of a reference signal. In this way, flexibility of setting the first-level weight W₁ and/or the second-level weight W₂ may be improved.

In a possible implementation of the first aspect and/or the second aspect, the first port set and the second port set may have no intersection (that is, the antenna ports in the first port set and the antenna ports in the second port set are completely different), or may partially overlap (that is, the antenna ports in the first port set and the antenna ports in the second port set are partially the same and partially different), or may completely overlap (that is, the antenna ports in the first port set and the antenna ports in the second port set are completely the same). Based on this implementation, the first apparatus may obtain the channel information across resources and port sets, that is, the first apparatus may obtain the channel information based on different reference signals, and these reference signals correspond to different port sets. In this way, the second apparatus may separately configure spatial relations for these port sets, so that combination forms of spatial relations corresponding to the channel information obtained by the first apparatus are more diversified.

The spatial relations of the port sets may be flexibly set. In a possible implementation of the first aspect and/or the second aspect, spatial relations corresponding to at least two of the N_{g1} port sets may be different or may be the same. Spatial relations corresponding to at least two of the N_{g2} port sets may be different or may be the same. A spatial relation corresponding to at least one of the N_{g1} port sets (for example, all port sets) may be different from a spatial relation corresponding to at least one of the N_{g2} port sets (for example, all port sets). A spatial relation corresponding to at least one of the N_{g1} port sets (for example, all port sets) may be the same as a spatial relation corresponding to at least one of the N_{g2} port sets (for example, all port sets). It can be learned that, in the implementation provided in this application, spatial relations may be set at granularities of port sets, so that flexibility of setting the spatial relations can be improved. In addition, the second apparatus may separately configure the spatial relations for the port sets, so that combination forms of spatial relations corresponding to the channel information obtained by the first apparatus are more diversified.

In a possible implementation of the first aspect and/or the second aspect, a quantity of port sets used to send a reference signal may be flexibly set, and quantities of port sets corresponding to two reference signals may be the same or may be different. For example, a quantity of antenna ports in at least one of the N_{g1} port sets may be different from or the same as a quantity of antenna ports in at least one of the N_{g2} port sets. N_{g1} and N_{g2} may be equal or unequal. The N_{g1} port sets are the same as the N_{g2} port sets. For example, if the first port set is the same as the second port set, it may be understood as that the antenna ports in the first port set are completely the same as the antenna ports in the second port set. In this solution, because a quantity of port sets may be flexibly set, flexibility of the solution may be further improved.

In a possible implementation of the first aspect and/or the second aspect, the N_{g1} port sets include N_{g1,1}*N_{g1,2} port sets, where N_{g1,1} indicates a quantity of port sets included in the N_{g1} port sets in a first dimension. N_{g1,2} indicates a quantity of port sets included in the N_{g1} port sets in a second dimension, N_{g1,1} is a positive integer, and N_{g1,2} is a positive integer. The N_{g2} port sets include N_{g2,1}*N_{g2,2} port sets, where N_{g2,1} indicates a quantity of port sets included in the N_{g2} port sets in the first dimension, N_{g2,2} indicates a quantity of port sets included in the N_{g2} port sets in the second dimension, N_{g2,1} is a positive integer, and N_{g2,2} is a positive integer. N_{g1,1} and N_{g2,1} are equal or unequal, and/or N_{g1,2} and N_{g2,2} are equal or unequal. In this solution, port sets may be divided in two dimensions, so that flexibility of this solution can be improved.

According to a third aspect, this application provides a communication method. The method is performed by a second apparatus. The second apparatus may be a network apparatus, or may be a terminal apparatus. The terminal apparatus in this application may be a terminal device or a chip (or a chip system) in the terminal device. The network apparatus in this application may be a network device or a chip (or a chip system) in the network device.

In the method, the second apparatus sends a first reference signal and a second reference signal. The first reference signal corresponds to a first port set, the second reference signal corresponds to a second port set, the first port set includes at least one antenna port, and the second port set includes at least one antenna port. The second apparatus receives channel information, where the channel information is determined based on the first reference signal sent through the first port set and the second reference signal sent through the second port set.

It can be learned that, the first apparatus may obtain the channel information based on the two reference signals. Therefore, in this solution, the first apparatus may also feed back more channel information when the second apparatus sends fewer reference signals. This solution reduces a quantity of reference signals delivered by the first apparatus, thereby reducing resource overhead.

In a possible implementation of the third aspect, the first port set belongs to N_{g1} port sets, N_{g1} is a positive integer, and the first reference signal corresponds to the N_{g1} port sets. The second port set belongs to N_{g2} port sets, N_{g2} is a positive integer, and the second reference signal corresponds to the N_{g2} port sets. For related content and beneficial effects, refer to related descriptions in the possible implementations of the first aspect. Details are not described again.

According to a fourth aspect, this application provides a communication method. The method is performed by a second apparatus. The second apparatus may be a network apparatus, or may be a terminal apparatus. The terminal apparatus in this application may be a terminal device or a chip (or a chip system) in the terminal device. The network apparatus in this application may be a network device or a chip (or a chip system) in the network device.

In the method, the second apparatus sends a first reference signal and a second reference signal. The first reference signal corresponds to N_{g1} port sets, N_{g1} is a positive integer, and a port set in the N_{g1} port sets includes at least one antenna port. The second reference signal corresponds to N_{g2} port sets, N_{g2} is a positive integer, and a port set in the N_{g2} port sets includes at least one antenna port. The second apparatus receives channel information. The channel information is determined based on the first reference signal sent through a first port set and the second reference signal sent through a second port set. The first port set belongs to the N_{g1} port sets, and the second port set belongs to the N_{g2} port sets. N_{g1} may be equal to 1 or may be greater than 1. N_{g2} may be equal to 1 or may be greater than 1. In a possible implementation, N_{g1} is an integer greater than 1, and/or N_{g2} is an integer greater than 1.

It can be learned that, the first apparatus may obtain the channel information based on the two reference signals. Therefore, in this solution, the first apparatus may also feed back more channel information when the second apparatus sends fewer reference signals. This solution reduces a quantity of reference signals delivered by the first apparatus, thereby reducing resource overhead.

In a possible implementation of the third aspect and/or the fourth aspect, the channel information is determined based on first channel information and second channel information, the first channel information is determined based on the first reference signal corresponding to the first port set, and the second channel information is determined based on the second reference signal corresponding to the second port set. For related content and beneficial effects, refer to the related descriptions in the possible implementations of the first aspect and/or the second aspect. Details are not described again.

In a possible implementation of the third aspect and/or the fourth aspect, the channel information may be determined based on the first channel information, the second channel information, and a combining coefficient, and the combining coefficient is determined based on the first reference signal corresponding to the first port set and the second reference signal corresponding to the second port set. For related content and beneficial effects, refer to the related descriptions in the possible implementations of the first aspect and/or the second aspect. Details are not described again.

In a possible implementation of the third aspect and/or the fourth aspect, the second apparatus may send or receive configuration information, where the configuration information includes indicating to determine the channel information based on the first reference signal and the second reference signal. For related content and beneficial effects, refer to the related descriptions in the possible implementations of the first aspect and/or the second aspect. Details are not described again.

In a possible implementation of the third aspect and/or the fourth aspect, the configuration information may include at least one of the following: indication information of the first port set, indication information of the first reference signal, indication information of the second port set, and indication information of the second reference signal. For related content and beneficial effects, refer to the related descriptions in the possible implementations of the first aspect and/or the second aspect. Details are not described again.

In a possible implementation of the third aspect and/or the fourth aspect, the indication information of the first port set includes at least one of the following: index information of an antenna port in the first port set, index information of the first port set, index information of a start antenna port in the first port set, information about a quantity of antenna ports included in the first port set, and index information of an end antenna port in the first port set. The indication information of the second port set includes at least one of the following: index information of an antenna port in the second port set, index information of the second port set, index information of a start antenna port in the second port set, information about a quantity of antenna ports included in the second port set, and index information of an end antenna port in the second port set. For related content and beneficial effects, refer to the related descriptions in the possible implementations of the first aspect and/or the second aspect. Details are not described again.

In a possible implementation of the third aspect and/or the fourth aspect, the channel information is sent in a sending manner corresponding to a first channel; and the sending manner is associated with a quantity of reference signals corresponding to the channel information, or the sending manner is associated with a quantity of reference signals corresponding to the channel information and a spatial relation corresponding to a reference signal. For related content and beneficial effects, refer to the related descriptions in the possible implementations of the first aspect and/or the second aspect. Details are not described again.

In a possible implementation of the third aspect and/or the fourth aspect, a sending manner corresponding to the channel information meets the following content: a codebook corresponding to the first port set and/or a codebook parameter corresponding to the first port set are/is determined based on the quantity of antenna ports in the first port set; and the codebook parameter corresponding to the first port set includes at least one of the following: the quantity of antenna ports in the first port set, and a non-zero element ratio, a basis selection ratio, and a quantity of bases that correspond to the first port set. A codebook corresponding to the second port set and/or a codebook parameter corresponding to the second port set are/is determined based on the quantity of antenna ports in the second port set; and the codebook parameter corresponding to the second port set includes at least one of the following: the quantity of antenna ports in the second port set, and a non-zero element ratio, a basis selection ratio, and a quantity of bases that correspond to the second port set. For related content and beneficial effects, refer to the related descriptions in the possible implementations of the first aspect and/or the second aspect. Details are not described again.

In a possible implementation of the third aspect and/or the fourth aspect, the sending manner corresponding to the channel information meets the following content: The codebook corresponding to the first port set is different from the codebook corresponding to the second port set; and/or the codebook parameter corresponding to the first port set is the same as the codebook parameter corresponding to the second port set. For related content and beneficial effects, refer to the related descriptions in the possible implementations of the first aspect and/or the second aspect. Details are not described again.

For related descriptions of content such as the N_{g1} port sets, the N_{g2} port sets, the first port set, and the second port set, refer to the related descriptions of the possible implementations of the first aspect and/or the second aspect. Details are not described again.

According to a fifth aspect, a communication apparatus is provided. The communication apparatus may be the foregoing first apparatus or the foregoing second apparatus. The communication apparatus may include a communication unit and a processing unit, to perform any one of the first aspect to the fourth aspect, or perform any one of the possible implementations of the first aspect to the fourth aspect. The communication unit is configured to perform functions related to sending and receiving. The communication unit may be referred to as a transceiver unit. Optionally, the communication unit includes a receiving unit and a sending unit. In a design, the communication apparatus is a communication chip, the processing unit may be one or more processors or processor cores, and the communication unit may be an input/output circuit, an input/output interface, or an antenna port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the fourth aspect, or perform any one of the possible implementations of the first aspect to the fourth aspect.

According to a sixth aspect, a communication apparatus is provided. The communication apparatus may be the foregoing first apparatus or the foregoing second apparatus. The communication apparatus may include a processor and a memory, to perform any one of the first aspect to the fourth aspect, or perform any one of the possible implementations of the first aspect to the fourth aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the fourth aspect, or perform any one of the possible implementations of the first aspect to the fourth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a seventh aspect, a communication apparatus is provided. The communication apparatus may be the foregoing first apparatus or the foregoing second apparatus. The communication apparatus may include a processor, to perform any one of the first aspect to the fourth aspect, or perform any one of the possible implementations of the first aspect to the fourth aspect. For example, the processor performs any one of the first aspect to the fourth aspect, or performs any one of the possible implementations of the first aspect to the fourth aspect by using a logic circuit or by executing a computer program or instructions in a memory. The processor is coupled to a memory. Optionally, the communication apparatus further includes the memory. Optionally, the communication apparatus further includes a communication interface, and the processor is coupled to the communication interface.

In an implementation, when the communication apparatus is the first apparatus or the second apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a system is provided, where the system includes the foregoing first apparatus and/or the foregoing second apparatus.

According to a ninth aspect, a computer program product is provided. The computer program product includes a computer program (which may also be referred to as code or instructions). When the computer program is run, a computer is enabled to perform any one of the first aspect to the fourth aspect, or perform any one of the possible implementations of the first aspect to the fourth aspect.

According to a tenth aspect, a computer-readable storage medium is provided. The computer-readable storage medium stores a computer program (which may also be referred to as code or instructions). When the computer program is run on a computer, the computer is enabled to perform any one of the first aspect to the fourth aspect, or perform any one of the possible implementations of the first aspect to the fourth aspect.

According to an eleventh aspect, a processing apparatus is provided and includes an interface circuit and a processing circuit. The interface circuit may include an input circuit and an output circuit. The processing circuit is configured to receive a signal by using the input circuit, and transmit a signal by using the output circuit, so that any one of the first aspect to the fourth aspect or any one of the possible implementations of the first aspect to the fourth aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a first apparatus or a second apparatus, the interface circuit may be a radio frequency processing chip in the first apparatus or the second apparatus, and the processing circuit may be a baseband processing chip in the first apparatus or the second apparatus.

In another implementation, the communication apparatus may be some components in the first apparatus or the second apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

### BRIEF DESCRIPTION OF DRAWINGS

FIG. 1A is a diagram of a communication architecture according to an embodiment of this application;
FIG. 1B is a diagram of another communication architecture according to an embodiment of this application;
FIG. 1C is a diagram of another communication architecture according to an embodiment of this application;
FIG. 2 is a possible diagram of an architecture of a communication system according to an embodiment of this application;
FIG. 3 is a possible diagram of an architecture of a communication system according to an embodiment of this application;
FIG. 4A is a possible diagram of sending a reference signal by a network apparatus;
FIG. 4B is a possible diagram of sending a reference signal by a network apparatus;
FIG. 5 is a possible diagram of sending a reference signal by a network apparatus according to an embodiment of this application;
FIG. 6 is a possible schematic flowchart of a communication method according to an embodiment of this application;
FIG. 7 is a possible schematic flowchart of a communication method according to an embodiment of this application;
FIG. 8A(a) to FIG. 8A(d) are possible diagrams of a division manner of a port set corresponding to a first reference signal according to an embodiment of this application;
FIG. 8B(a) to FIG. 8B(d) are possible diagrams of structures of several antenna panels according to an embodiment of this application;
FIG. 9a to FIG. 9c show a possible example of a port set and a beam (or a spatial relation) according to an embodiment of this application;
FIG. 10a and FIG. 10b are possible relationship diagrams of a reference signal and a port set that correspond to channel information measured by a terminal apparatus according to an embodiment of this application;
FIG. 11 is a possible diagram of a communication method according to an embodiment of this application;
FIG. 12 is a possible diagram of a port set on a network apparatus according to an embodiment of this application;
FIG. 13 is a possible diagram of a port set on a network apparatus according to an embodiment of this application;
FIG. 14 is a possible schematic flowchart of a communication method according to an embodiment of this application;
FIG. 15 is another diagram of a communication apparatus according to this application; and
FIG. 16 is another diagram of a communication apparatus according to this application.

### DESCRIPTION OF EMBODIMENTS

The following describes some terms in embodiments of this application, to facilitate understanding of a person skilled in the art.

### (1) Reference signal (reference signal, RS)

The reference signal is also referred to as a pilot signal. In a communication system, to send and receive data, obtain system synchronization, and feed back channel information, an uplink channel or a downlink channel needs to be estimated. Channel estimation is a process of reconstructing or restoring a received signal to compensate for signal distortion caused by channel fading and noise-induced attenuation, and tracks changes of a channel in time domain and frequency domain by using standard signals predicted by a transmitter and a receiver. The standard signal is also referred to as a reference signal, is distributed on different resource elements (resource elements, REs) in time-frequency two-dimensional space in an orthogonal frequency division multiplexing (orthogonal frequency division multiplexing, OFDM) symbol, and has a known amplitude and phase.

At a physical layer, uplink communication may include transmission of an uplink physical channel and an uplink signal. The uplink physical channel includes a random access channel (random access channel, PRACH), a physical uplink control channel (physical uplink control channel, PUCCH), a physical uplink data channel (physical uplink shared channel, PUSCH), and the like. The uplink signal includes a sounding reference signal (sounding reference signal, SRS), a physical uplink control channel demodulation reference signal (PUCCH demodulation reference signal, PUCCH-DMRS), a physical uplink shared channel demodulation reference signal (PUSCH demodulation reference signal, PUSCH-DMRS), a phase tracking reference signal (phase tracking reference signal, PTRS), a positioning reference signal (positioning SRS or SRS for positioning), and the like.

At the physical layer, downlink communication may include transmission of a downlink physical channel and a downlink signal. The downlink physical channel includes a broadcast channel (physical broadcast channel, PBCH), a physical downlink control channel (physical downlink control channel, PDCCH), a physical downlink shared channel (physical downlink shared channel, PDSCH), and the like. The downlink signal includes a primary synchronization signal (primary synchronization signal, PSS)/secondary synchronization signal (secondary synchronization signal, SSS), a physical downlink control channel demodulation reference signal (PDCCH demodulation reference signal, PDCCH-DMRS), a physical downlink shared channel demodulation reference signal (PDSCH demodulation reference signal, PDSCH-DMRS), a PTRS, a channel state information reference signal (channel state information reference signal, CSI-RS), a cell signal (cell reference signal, CRS), a tracking reference signal (tracking reference signal, TRS), a positioning reference signal (positioning RS), and the like.

A network device configures one or more reference signal resources for a terminal device. The reference signal resource is used to carry the reference signal. In this application, the reference signal and the reference signal resource may be replaced with each other. During configuration, each reference signal resource corresponds to one reference signal resource index (index) or one reference signal resource identifier (identifier, id), to distinguish each reference signal resource. In addition, the network device may configure one or more reference signal resource sets for the terminal device. Each reference signal resource set includes one or more reference signal resources, and each reference signal resource set corresponds to one reference signal resource set identifier. In a reference signal resource set, each reference signal resource corresponds to one reference signal resource indicator (indicator). For example, a reference signal resource indicator 0 indicates a 1^{st} reference signal resource in the reference signal resource set, a reference signal resource indicator 1 indicates a 2^{nd} reference signal resource in the reference signal resource set, and the rest is deduced by analogy. When the network device indicates a reference signal resource in the reference signal resource set, or the terminal device reports a measurement result of a reference signal resource in the reference signal resource set, a corresponding reference signal resource may be indicated by a reference signal resource indicator. In this application, an identifier may also be referred to as an identifier.

### (2) Resource

In embodiments of this application, a network apparatus may configure a resource set/or a resource for a terminal apparatus.

The resource set may include at least one of the following: a channel state information (channel state information, CSI)-SSB resource set, a CSI interference measurement (CSI interference measurement, CSI-IM) resource set, a non-zero power channel state information reference signal (non-zero power channel state information reference signal, NZP-CSI-RS) resource set, or a zero power channel state information reference signal (zero power channel state information reference signal, ZP-CSI-RS) resource set. SSB is short for a synchronization signal/physical broadcast channel block (synchronization signal/physical broadcast channel block, SSB or SS/PSBCH block).

In this embodiment of this application, a reference signal may correspond to a resource, the reference signal may occupy the resource, and one resource may be referred to as a resource of the reference signal. The resource in this embodiment of this application may include a frequency domain resource, a time domain resource, and/or the like. The resource may further include at least one of the following: a CSI-SSB resource, a CSI-IM resource, an NZP-CSI-RS resource, a ZP-CSI-RS resource, an SRS resource, a demodulation reference signal (demodulation reference signal, DMRS) resource, a PTRS resource, a CRS resource, or a TRS resource. In this embodiment of this application, an example in which the resource is a channel state information reference signal (channel state information reference signal, CSI-RS) resource is used for description. The CSI-RS resource is also expressed as a channel state information reference signal (channel state information reference signal, CSIRS) resource in this specification, and the CSIRS resource may also be replaced with another resource. The CSI-RS resource may also be understood as a resource occupied by a CSI-RS, or may be replaced with a resource corresponding to a CSI-RS, or may be replaced with a resource of a CSI-RS.

### (3) Hybrid beamforming (hybrid beamforming, HBF)

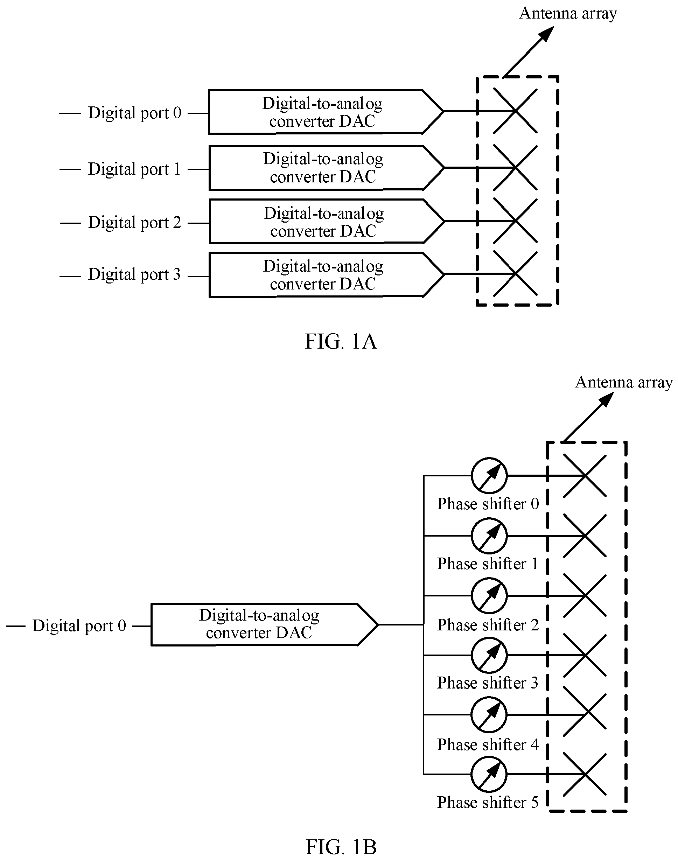

An example in which a network device is a base station is used below to describe a beam implementation process with reference to implementation content shown in FIG. 1A to FIG. 1C. In a communication system of a high band, the base station (and terminals of a part of bands) usually uses a large-scale array antenna (for example, 500 to more than 1000 antenna elements), and a high array gain is used to resist a path loss caused by an increase of the band, to improve a coverage capability. From the perspective of an implementation of the base station, for the same large array, array weighting manners (namely, different beamforming manners) for different bands and different array scales are roughly classified into the following three types according to beamforming implementation solutions.

An implementation is digital beamforming (digital beamforming, DBF), and a basic structure of digital beamforming is shown in FIG. 1A. Each antenna element or each group of antenna elements is directly connected to one digital channel. This structure is a typical low-band massive multiple-input multiple-output (massive MIMO) structure. Each antenna signal is directly converted to digital domain, and subsequent array weighting is performed in digital domain. Therefore, this is referred to as digital beamforming. Digital domain signal processing has the highest degree of freedom and supports a complex signal processing manner. Therefore, the DBF architecture has the best performance in the same array scale. In addition, power consumption and costs of a digital-to-analog converter (digital-to-analog converter, DAC)/analog-to-digital converter (analog-to-digital converter, ADC) are high (especially in a case of a large bandwidth). Generally, DBF costs are the highest in the same array scale.

Another implementation is analog beamforming (analog beamforming, ABF), and a structure of analog beamforming is shown in FIG. 1B. Each antenna element or each group of antenna elements is connected to one analog phase shifter, and then a plurality of antenna elements are combined in analog domain and then pass through one digital-to-analog/analog-to-digital converter. Compared with DBF, the entire ABF array corresponds to only one digital-to-analog/analog-to-digital converter. Therefore, the ABF architecture has the greatest advantage of low costs and power consumption. A bottleneck of ABF is also evident. A setting of the phase shifter in analog domain determines a beam direction after beamforming. Because electrical signals are directly combined in analog domain, and cannot be weighted through digital signal processing like in DBF, ABF needs to preconfigure the setting of the phase shifter (that is, steer an analog beam toward a target terminal) during receiving and sending. This process needs to be completed through beam sweeping in a link establishment phase, causing an extra delay. Generally, once the analog beam is blocked or moved, causing misalignment, system link quality is rapidly reduced, or even a link is interrupted. Therefore, communication reliability of ABF is not as good as that of DBF.

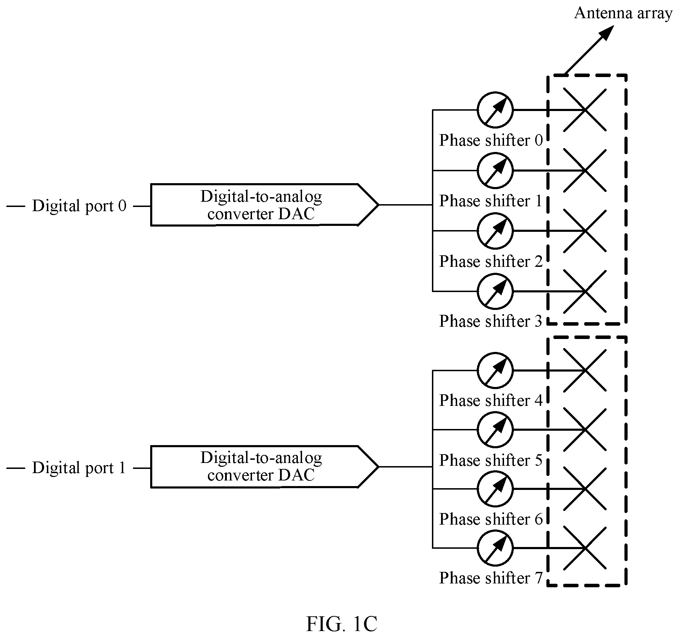

Another implementation is hybrid beamforming (hybrid beamforming, HBF), and a structure of hybrid beamforming is shown in FIG. 1C, which is a middle form of ABF and DBF. In the figure, a three-channel HBF architecture is used as an example, where each channel corresponds to two analog phase shifters. HBF has a specific quantity of digital ports to support digital beamforming, and each digital port drives one ABF subarray. Compared with ABF, in the same array scale, a scale of an analog subarray driven by each digital channel is smaller (four in FIG. 1C vs. six in FIG. 1B). Therefore, a beam is wider, reliability is better, and beam sweeping overhead are smaller. Generally, a ratio of the digital ports of HBF to the analog phase shifters of HBF varies with different frequencies and system design requirements. For example, in a high band, a quantity of digital ports is small (4 to 16), and a single digital channel corresponds to more analog phase shifters (16 to 32), closer to ABF; while in a low band, the system has more digital ports (32 to 128), and a single digital channel corresponds to fewer analog phase shifters (for example, 2 to 10).

Generally, both the HBF architecture and the ABF architecture have analog beams. When the beams are aligned with a communication target, signal quality is improved. A direction (determined by a beam weight) of the analog beam needs to be configured before receiving and sending. For a terminal, a process in which the base station selects an analog beam is referred to as beam training or beam sweeping. In beam sweeping, the base station usually sends reference signals by using different analog beam weights, and the terminal separately measures the reference signals, and feeds back measurement results of the reference signals, to assist the base station in determining a beam with the best quality.

### (4) Antenna port

The antenna port may be referred to as a port for short, and may be understood as a virtual transmit antenna (or an antenna group) identified by a receive end, or a virtual transmit antenna (or an antenna group) that can be distinguished in space. One antenna port may be preconfigured for each virtual antenna, each virtual antenna may be a weighted combination of a plurality of physical antennas, and one or more antenna ports may correspond to one reference signal. Therefore, each antenna port may be referred to as a reference signal port, for example, a CSI-RS port, a DMRS port, or an SRS port. In this embodiment provided in this application, one antenna port may also be used to transmit a plurality of reference signals. For example, the plurality of reference signals may be sent through the antenna port in a frequency division manner or a time division manner.

The antenna port is a logical concept, and generally, there is a correspondence between an antenna port and a physical antenna. The antenna port is usually associated with a reference signal, and the antenna port may be understood as a transceiver interface on a channel through which the reference signal passes. For a low frequency, one antenna port may correspond to one or more antenna array elements. The array elements jointly send a reference signal. The receive end may consider the array elements as a whole, and does not need to distinguish between the array elements. For a high-frequency system, the antenna port may correspond to one beam. Similarly, the receive end only needs to consider the beam as an interface, and does not need to distinguish between array elements.

In addition, a port set may be a set corresponding to a plurality of antenna ports. In a manner, a plurality of digital ports of a network device are grouped, to form a plurality of port sets. In another manner (for example, in an HBF architecture), the port set may include a plurality of digital ports corresponding to a same analog beam, also referred to as a port set or a digital-analog port set for short. Alternatively, the port set may be a digital port set corresponding to a plurality of analog beams, also referred to as a port set or a digital-analog port set for short. Alternatively, a plurality of digital ports of a same analog beam are grouped into a plurality of subsets, and each subset is referred to as a port set or a digital-analog port set.

In a protocol, the antenna port is usually represented by an antenna port or a port, or may be represented by a resource (for example, a CSI-RS resource, an SRS resource, a DMRS resource, a PTRS resource, a CRS resource, a TRS resource, or an SSB resource) or a resource group. In other words, an identifier of the antenna port in this application may be replaced with an identifier of the foregoing content. For example, the antenna port may be replaced with an identifier of the resource, an identifier of a pilot resource, an identifier of a reference signal resource, or the like.

One port set includes one or more antenna ports, and usually corresponds to one or more resources. A concept of the port set may also be replaced with another name, for example, a resource group, a resource set, a pilot resource group, a pilot resource set, a reference signal resource group, a reference signal resource set, a port group, an antenna port group, an antenna port set, or an antenna port set. This is not limited in this embodiment of this application. In this embodiment of this application, the port set may also be replaced with "a port #A to a port #B". The port #A and the port #B may be understood as examples of indexes of ports. Antenna ports indicated by the port #A to the port #B may be understood as antenna ports whose indexes are from #A to #B, and the indexes of these antenna ports are consecutive. In this embodiment of this application, the port set may also be replaced with indexes of antenna ports included in the port set. In this case, the antenna ports included in the port set may be consecutive antenna ports, or may be inconsecutive antenna ports.

### (5) CSI report (report)

In a wireless communication system, a receive end (for example, a terminal device) reports information used to describe a channel attribute of a communication link to a transmit end (for example, a network device). The CSI report may include, for example, but is not limited to, a precoding matrix indicator (precoding matrix indicator, PMI), a rank indicator (rank indicator, RI), a channel quality indicator (channel quality indicator, CQI), a channel state information reference signal (channel state information reference signal, CSI-RS) CSI-RS resource indicator (CSI-RS resource indicator, CRI), and a layer indicator (layer indicator, LI). It should be understood that, the foregoing listed specific content of the CSI is merely an example for description, and should not constitute any limitation on this application. The CSI may include one or more of the foregoing listed content, or may include other information that is different from the foregoing listed content and that is used to represent the CSI. This is not limited in this application.

### (6) Beam

In the new radio (new radio, NR) protocol, the beam may be represented as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a transmission configuration indicator state (transmission configuration indicator state, TCI-state) parameter or a spatial relation parameter.

Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (a downlink TCI-state and an uplink TCI-state), a spatial relation, or the like. The foregoing terms are also equivalent to each other. Alternatively, the beam may be replaced with another term for representing a beam. This is not limited in this application.

A beam used to send a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using the TCI-state.

In this embodiment of this application, any two of a downlink beam, a CSI-RS, a TCI-state, a downlink/joint TCI state (DL or joint TCI state), an SSB, and a TRS may be replaced with each other.

A beam used to receive a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation, an uplink TCI-state, or an SRS resource (which indicates that a transmission beam of an SRS is used). Therefore, the uplink beam may alternatively be replaced with the SRS resource.

In this embodiment of this application, any two of a downlink beam, a CSI-RS, a TCI-state, a downlink/joint TCI state (DL or joint TCI state), an SSB, and a TRS may be replaced with each other.

The transmission beam may be distribution of signal strength formed in different directions in space after a signal is transmitted through an antenna, and the reception beam may be distribution of signal strength, in different directions in space, of a radio signal received from an antenna.

In addition, the beam may be a wide beam, a narrow beam, or a beam of another type. Technology for forming the beam may be beamforming technology or another technology. The beamforming technology may be specifically digital beamforming technology, analog beamforming technology, hybrid digital/analog beamforming technology, or the like.

The beam usually corresponds to a resource. For example, during beam measurement, a network device measures different beams by using different resources, a terminal device feeds back measured resource quality, and the network device knows quality of a corresponding beam. During data transmission, beam information is also indicated by using a resource corresponding to the beam information. For example, the network device indicates information about a physical downlink shared channel (physical downlink shared channel, PDSCH) beam of the terminal device by using a transmission configuration indicator (transmission configuration indicator, TCI) field in downlink control information (downlink control information, DCI).

Optionally, a plurality of beams having same or similar communication features are considered as one beam. One beam may include one or more antenna ports, and is used to transmit a data channel, a control channel, a sounding signal, and the like. The one or more antenna ports forming the beam may also be considered as one antenna port set.

In embodiments of this application, unless otherwise specified, the beam is a transmission beam of a second apparatus. During beam measurement, each beam of the second apparatus corresponds to one resource. Therefore, an index of the resource may uniquely identify the beam corresponding to the resource.

### (6.1) TCI-state (indicating a downlink beam)

The network device may generate different beams that point to different transmission directions. In downlink data transmission, when sending data to the terminal device by using a specified beam, the network device needs to notify the terminal device of information about the transmit beam used by the network device. In this way, the terminal device can receive, by using a receive beam corresponding to the transmit beam, the data sent by the network device.

In the 3GPP R15/R16 protocol, the network device indicates, to the terminal device by using the TCI field in the DCI, related information of the transmit beam used by the network device. Specifically, a size of the TCI field is three bits, and may specifically represent eight different field values (codepoint). Each value of the TCI field corresponds to a TCI-state index, and the TCI-state index may uniquely identify a TCI-state. The TCI-state in this embodiment of this application may also be expressed as a TCI state. The TCI-state includes several parameters, and the related information of the transmit beam may be determined by using these parameters. The TCI-state is configured by the network device for each terminal device. Each TCI-state includes an index TCI-state identifier of the TCI-state and two pieces of QCL information (QCL information, QCL-Info). Each piece of QCL-Info includes one cell field and one BWP-ID, respectively indicating a specific BWP (Bandwidth part) of a specific cell (cell) to which the TCI-state is applied, that is, different QCL-Info may be configured for different BWPs of different cells or a same cell. The QCL-Info further includes one reference signal (reference signal), indicating a specific reference signal resource with which a QCL (quasi-co-location, quasi-co-location) relationship is formed.

In the R15/R16 protocol, the term "beam" is usually not directly used, and the beam is usually replaced with another term. For example, in both data transmission and channel measurement, the beam corresponds to a reference signal resource, and one beam corresponds to one reference signal resource. Therefore, forming a QCL relationship with which reference signal resource herein is essentially forming a QCL relationship with which beam. The QCL relationship means that two reference signal resources (or two antenna ports, where antenna ports and reference signal resources are also in one-to-one correspondence) have some same spatial parameters. Specifically, specific spatial parameters that are the same depends on a type of the QCL-Info, namely, another field qcl-Type of the QCL-Info. qcl-Type may have four values {typeA, typeB, typeC, typeD}. TypeD is used as an example. TypeD indicates that the two reference signal resources have same spatial reception parameter information. That is, two beams have a same reception beam. A maximum of one of the two pieces of QCL-Info included in the TCI-state can be of TypeD.

### (6.2) Spatial relation (spatial relation) (indicating an uplink beam)

In the current protocol, a transmission beam for uplink transmission is indicated by the spatial relation, and a function of the spatial relation is similar to that of the TCI-state, and notifies the terminal device of a specific transmission beam to be used for uplink transmission.

The spatial relation also needs to be first configured by using radio resource control (radio resource control, RRC) signaling. The RRC signaling may include an ID of the spatial relation, a cell ID, a target reference signal resource, a path loss measurement reference signal, a power control parameter, or the like. The target reference signal resource (which may be one of an SRS/an SSB/a CSI-RS) indicates the corresponding uplink beam. If a spatial relation #1 is used for uplink transmission, and the spatial relation #1 includes one target reference signal resource #2, it indicates that a transmission beam used for uplink transmission is a transmission/reception beam of the target reference signal. For example, when the target reference signal resource is an uplink resource SRS, it indicates that the transmission beam used for uplink transmission is a transmission beam of the SRS (where the transmission beam of the SRS is known). For another example, when the target reference signal resource is a downlink resource such as an SSB/a CSI-RS, it indicates that the transmission beam used for uplink transmission is a reception beam of the SSB/the CSI-RS (where the reception beam of the SSB/CSI-RS is known).

The network device may configure a plurality of spatial relations for the terminal device. Then, one of the spatial relations is activated for corresponding data transmission through a medium access control control element (MAC control element, MAC CE). MAC is short for media access control (media access control, MAC) or medium access control (medium access control, MAC). Uplink transmission includes a physical uplink control channel (physical uplink control channel, PUCCH), an SRS, a physical uplink shared channel (physical uplink shared channel, PUSCH), and the like, and all of them require corresponding spatial relations. The spatial relation of the PUCCH is indicated by using MAC CE signaling. The spatial relation of the SRS is also indicated by using the MAC CE signaling. During PUSCH transmission, a specific SRS is associated, and transmission is performed by using the spatial relation of the SRS.

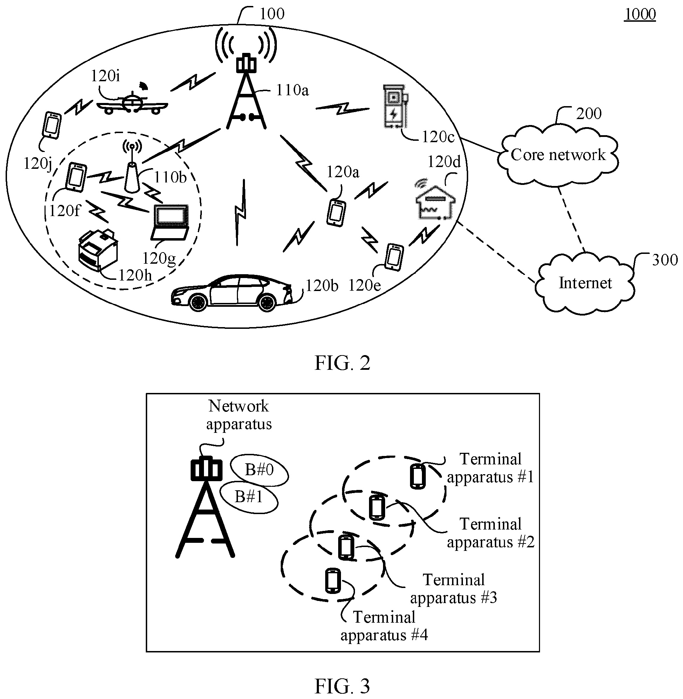

FIG. 2 shows an example of a diagram of an architecture of a communication system 1000 to which an embodiment of this application is applicable. FIG. 2 is a diagram of an architecture of a communication system 1000 to which an embodiment of this application is applied. As shown in FIG. 2, the communication system includes a radio access network (radio access network, RAN) 100 and a core network 200. Optionally, the communication system 1000 may further include an internet 300. The RAN 100 includes at least one RAN node (for example, 110a and 110b in FIG. 2, which are collectively referred to as 110), and may further include at least one terminal (for example, 120a to 120j in FIG. 2, which are collectively referred to as 120). The RAN 100 may further include another RAN node, for example, a wireless relay device and/or a wireless backhaul device (not shown in FIG. 2). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Mutual connections between terminals and between RAN nodes may be implemented in a wired or wireless manner.

The RAN 100 may be an evolved universal terrestrial radio access (evolved universal terrestrial radio access, E-UTRA) system, an NR system, and a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN).

The network device in embodiments of this application may be a RAN node. The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, or a base station in a future mobile communication system. The RAN node may be a macro base station (for example, 110a in FIG. 2), may be a micro base station or an indoor base station (for example, 110b in FIG. 2), or may be a relay node or a donor node.

In another application scenario, a plurality of RAN nodes may cooperate to help a terminal implement radio access, and different RAN nodes respectively implement some functions of the base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a MAC layer of the base station, and may further complete a part or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The CU-control plane (CU-control panel, CU-CP) may also be referred to as an open CU-CP (open CU-CP, O-CU-CP), and the CU-user plane (CU-user panel, CU-UP) may also be referred to as an open CU-UP (open CU-UP, O-CU-UP). The RAN node in embodiments of this application may be implemented by using a software module, a hardware module, or a combination of a software module and a hardware module. For example, the RAN node may be a server loaded with a corresponding software module. Specific technology and a specific device form that are used by the RAN node are not limited in embodiments of this application. For ease of description, the following is described by using an example in which a base station is used as the RAN node.

The terminal is a device having a wireless transceiver function, and may send a signal to a base station or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, remote medical, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. Specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 2 may be configured as a mobile base station. For a terminal 120j accessing the radio access network 100 through 120i, the terminal 120i is a base station. However, for the base station 110a, 120i is a terminal. In other words, communication between 110a and 120i is performed based on a radio air interface protocol. Certainly, 110a and 120i may alternatively communicate with each other according to an interface protocol between base stations. In this case, for 110a, 120i is also a base station. Therefore, both the base station and the terminal may be collectively referred to as communication apparatuses, 110a and 110b in FIG. 2 may be referred to as communication apparatuses having a base station function, and 120a to 120j in FIG. 2 may be referred to as communication apparatuses having a terminal function.

Communication between a base station and a terminal, between base stations, and between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may be alternatively performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

Communication between the access network device and the terminal device may comply with a specific protocol layer structure. For example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a MAC layer, or a physical (physical, PHY) layer. For example, the user plane protocol layer structure may include at least one of the following: a service data adaptation protocol (service data adaptation protocol, SDAP) layer, a PDCP layer, an RLC layer, a MAC layer, or a physical layer.

The access network device may include a central unit (central unit, CU) and a distributed unit (distributed unit, DU). This design may be referred to as CU and DU separation. A plurality of DUs may be centrally controlled by one CU. For example, an interface between the CU and the DU is referred to as an F1 interface. A control plane (control panel, CP) interface may be F1-C, and a user plane (user panel, UP) interface may be F1-U. A specific name of each interface is not limited in embodiments of this application. The CU and the DU may be divided based on a protocol layer of a wireless network. For example, functions of a PDCP layer and a protocol layer (for example, an RRC layer and an SDAP layer) above the PDCP layer are set in the CU, and functions of a protocol layer (for example, an RLC layer, a MAC layer, and a PHY layer) below the PDCP layer are set in the DU. For another example, the functions of the protocol layer above the PDCP layer are set in the CU, and the functions of the protocol layer below the PDCP layer are set in the DU. This is not limited.

The division into processing functions of the CU and the DU based on protocol layers is merely an example, and may also be division in another manner. For example, the CU or the DU may have functions of more protocol layers through division. For another example, the CU or the DU may have some processing functions of protocol layers through division. For example, a part of functions of the RLC layer and functions of protocol layers above the RLC layer are set in the CU, and remaining functions of the RLC layer and functions of protocol layers below the RLC layer are set in the DU. For another example, division into functions of the CU or the DU may alternatively be performed based on service types or other system requirements. For example, division may be performed based on latencies. Functions whose processing time needs to satisfy a latency requirement are set in the DU, and functions whose processing time does not need to satisfy the latency requirement are set in the CU.

Optionally, the CU may have one or more functions of the core network.

Optionally, a radio unit (radio unit, RU) of the DU may be disposed remotely. The RU has a radio frequency function. For example, the DU and the RU may be set at the PHY layer through division. For example, the DU may implement a higher-layer function of the PHY layer, and the RU may implement a lower-layer function of the PHY layer. When sending is performed, functions of the PHY layer may include at least one of the following: adding a cyclic redundancy check (cyclic redundancy check, CRC) bit, channel encoding, rate matching, scrambling, modulation, layer mapping, precoding, resource mapping, physical antenna mapping, or radio frequency sending. When receiving is performed, functions of the PHY layer may include at least one of the following: CRC check, channel decoding, rate de-matching, descrambling, demodulation, layer demapping, channel detection, resource demapping, physical antenna demapping, or a radio frequency receiving function. The higher-layer functions of the PHY layer may include a part of functions of the PHY layer. For example, the part of functions are closer to the MAC layer. The lower-layer functions of the PHY layer may include another part of functions of the PHY layer. For example, the part of functions are closer to a radio frequency function. For example, the higher-layer functions of the PHY layer may include adding a CRC bit, channel encoding, rate matching, scrambling, modulation, and layer mapping, and the lower-layer functions of the PHY layer may include precoding, resource mapping, physical antenna mapping, and a radio frequency sending function. Alternatively, the higher-layer functions of the PHY layer may include adding a CRC bit, channel encoding, rate matching, scrambling, modulation, layer mapping, and precoding, and the lower-layer functions of the PHY layer may include resource mapping, physical antenna mapping, and a radio frequency sending function. For example, the higher-layer functions of the PHY layer may include CRC check, channel decoding, rate de-matching, decoding, demodulation, and layer de-mapping, and the lower-layer functions of the PHY layer may include channel detection, resource de-mapping, physical antenna de-mapping, and a radio frequency receiving function. Alternatively, the higher-layer functions of the PHY layer may include CRC check, channel decoding, rate de-matching, decoding, demodulation, layer de-mapping, and channel detection, and the lower-layer functions of the PHY layer may include resource de-mapping, physical antenna de-mapping, and a radio frequency receiving function.

Optionally, the functions of the CU may be further divided, and a control plane and a user plane are separated and implemented through different entities. Separated entities are respectively a control plane CU entity (namely, a CU-CP entity) and a user plane CU entity (namely, a CU-UP entity). The CU-CP entity and the CU-UP entity may be separately connected to the DU. In embodiments of this application, the entity may be understood as a module or a unit, and may exist in a form of a hardware structure, a software module, or a combination of the hardware structure and the software module. This is not limited.

Optionally, any one of the CU, the CU-CP, the CU-UP, the DU, and the RU may be a software module, a hardware structure, or a combination of the software module and the hardware structure. This is not limited. Different entities may have a same existence form or may have different existence forms. For example, the CU, the CU-CP, the CU-UP, and the DU are software modules, and the RU is a hardware structure. For brevity of description, all possible combination forms are not enumerated herein. These modules and methods performed by these modules also fall within the protection scope of embodiments of this application. For example, when the method in embodiments of this application is performed by the access network device, the method may be specifically performed by at least one of the CU, the CU-CP, the CU-UP, or the DU.

Based on embodiments shown in FIG. 1A, FIG. 1B, FIG. 1C, and FIG. 2, FIG. 3 shows an example of a possible diagram of an architecture of a communication system according to an embodiment of this application. As shown in FIG. 3, the communication system includes a network apparatus and one or more terminal apparatuses (in FIG. 3, a terminal apparatus #1, a terminal apparatus #2, a terminal apparatus #3, and a terminal apparatus #4 are used as an example for illustration). The network apparatus may be the network device in FIG. 1A, FIG. 1B, FIG. 1C, and FIG. 2, or a chip or a chip system in the network device. The terminal apparatus may be the terminal device in FIG. 1A, FIG. 1B, FIG. 1C, and FIG. 2, or a chip or a chip system in the terminal device. As shown in FIG. 3, the network apparatus may send a reference signal to the terminal apparatus, the terminal apparatus measures the received reference signal to obtain channel information, and the terminal apparatus sends the channel information to the network apparatus. The channel information may be understood as channel information of a downlink channel. The network apparatus may determine channel information of an uplink channel based on channel reciprocity and the information about the downlink channel. Alternatively, the terminal apparatus may send a reference signal to the network apparatus, and the network apparatus measures the received reference signal to obtain channel information. The channel information may be understood as channel information of an uplink channel. A downlink channel measurement process implemented based on a downlink reference signal is used as an example. When sending a reference signal (for example, a CSI-RS), the network apparatus may send the reference signal based on a beam (a beam B#0 and a beam B#1 are used as an example in FIG. 3). A same reference signal may correspond to a plurality of port sets, and beams corresponding to the plurality of port sets of the same reference signal may be the same or may be different. During actual application, there may be a plurality of terminal apparatuses that need to measure a reference signal sent by the network apparatus, to obtain channel information.

In a current solution, after receiving a reference signal sent by the network apparatus, the terminal apparatus can feed back only channel information corresponding to the reference signal. Channel information that needs to be fed back by different terminal apparatuses may correspond to different beam and port combination forms. To meet requirements of the different terminal apparatuses, the network apparatus may need to send reference signals corresponding to a plurality of port set and beam combination forms. As a result, the first apparatus sends excessive reference signals, resulting in high resource overhead.

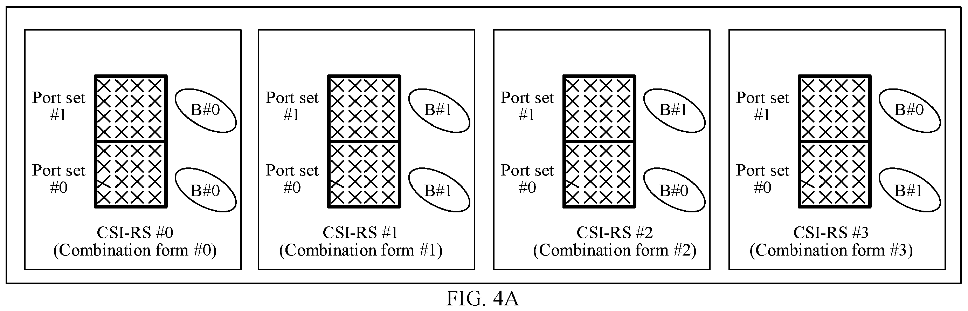

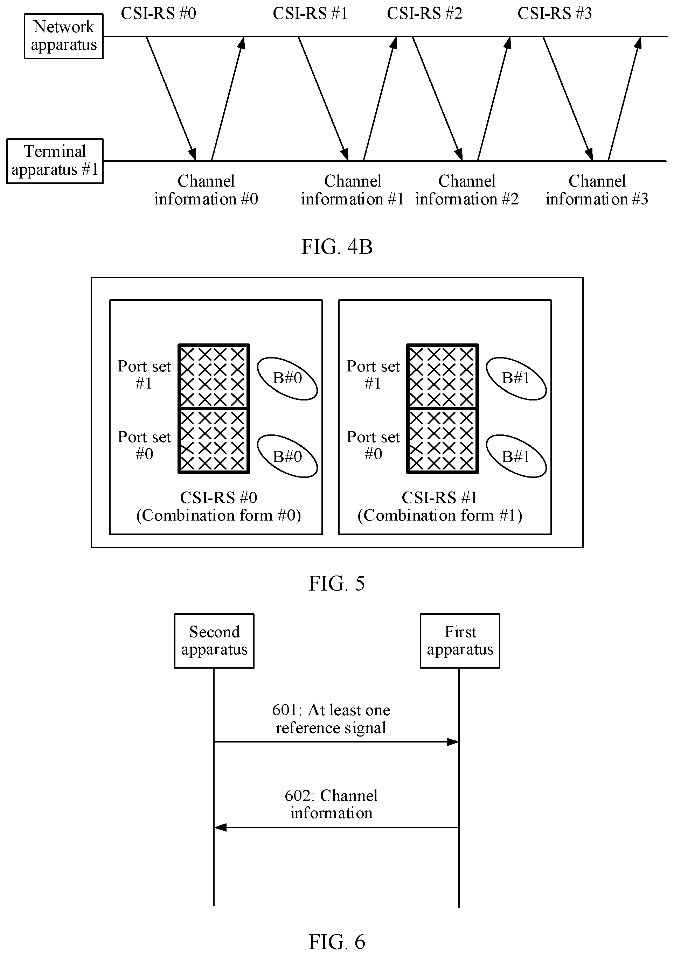

For ease of understanding, FIG. 4A and FIG. 4B show examples of possible diagrams of sending a reference signal by a network apparatus.

Refer to FIG. 4A. The network apparatus includes a port set #0 and a port set #1, and a beam for sending the reference signal by the network apparatus may include a beam B#0 and a beam B#1. The network apparatus traverses each port set and beam combination form, that is, the first apparatus needs to send reference signals corresponding to four combination forms, for example, separately sends a CSI-RS #0, a CSI-RS #1, a CSI-RS #2, and a CSI-RS #3 in FIG. 4A. For example, in FIG. 4A, a combination form #0 corresponding to the CSI-RS #0 is: {the port set #0 corresponds to the beam B#0, and the port set #1 corresponds to the beam B#0}; a combination form #1 corresponding to the CSI-RS #1 is: {the port set #0 corresponds to the beam B#1, and the port set #1 corresponds to the beam B#1}; a combination form #2 corresponding to the CSI-RS #2 is: {the port set #0 corresponds to the beam B#0, and the port set #1 corresponds to the beam B#1}; and a combination form #3 corresponding to the CSI-RS #3 is: {the port set #0 corresponds to the beam B#1, and the port set #1 corresponds to the beam B#0}.

Each terminal apparatus may feed back, based on each combination form, channel information corresponding to the combination form. Refer to FIG. 4B. The network apparatus sends a CSI-RS #0, and the terminal apparatus feeds back channel information #0 obtained by measuring the CSI-RS #0. The network apparatus sends a CSI-RS #1, and the terminal apparatus feeds back channel information #1 obtained by measuring the CSI-RS #1. The network apparatus sends a CSI-RS #2, and the terminal apparatus feeds back channel information #2 obtained by measuring the CSI-RS #2. The network apparatus sends a CSI-RS #3, and the terminal apparatus feeds back channel information #3 obtained by measuring the CSI-RS #3.

A plurality of terminal apparatuses may need to obtain channel information corresponding to different port set and beam combination forms. To meet requirements of each terminal apparatus, the network apparatus usually needs to traverse all port combination and beam combination forms. It can be learned that, in this solution, the network apparatus needs to deliver a large quantity of reference signals, resulting in high resource overhead.

For the foregoing case, this application provides a solution. In this solution, the first apparatus may send fewer combination forms, and the second apparatus may feed back channel information corresponding to more combination forms. For ease of understanding, FIG. 5 is a possible diagram of sending a reference signal by a network apparatus according to an embodiment of this application. As shown in FIG. 5, the network apparatus may send only a CSI-RS #0 and a CSI-RS #1. For related content, refer to the related descriptions in FIG. 4A. Details are not described again. After receiving the CSI-RS #0 corresponding to a combination form #0 and the CSI-RS #1 corresponding to a combination form #1, a terminal apparatus not only has a capability of feeding back channel information corresponding to the combination form #0 and channel information corresponding to the combination form #1, but also has a capability of feeding back channel information corresponding to a combination form #3 and channel information corresponding to a combination form #4. For example, the terminal apparatus may feed back channel information corresponding to a combination form #2 based on the CSI-RS #0 sent through a port set #0 and the CSI-RS #1 sent through a port set #1. For example, the terminal apparatus may feed back the channel information corresponding to the combination form #3 based on the CSI-RS #0 sent through a port set #1 and the CSI-RS #1 sent through a port set #0.

In the foregoing example, the network apparatus may also obtain the channel information corresponding to the combination form #2 and the channel information corresponding to the combination form #3 without delivering a reference signal corresponding to the combination form #2 and a reference signal corresponding to the combination form #3. It can be learned that, this solution reduces a quantity of reference signals delivered by the first apparatus, thereby reducing resource overhead.

The foregoing example is also applicable to a transmission process of an uplink reference signal. A difference from the foregoing example lies in that the terminal apparatus can reduce a quantity of sent reference signals, and the network apparatus can obtain channel information corresponding to more combination forms. Other content is similar to that in the foregoing example, and details are not described again.

Based on embodiments shown in FIG. 1A, FIG. 1B, FIG. 1C, FIG. 2, FIG. 3, FIG. 4A, FIG. 4B, and FIG. 5, FIG. 6 shows an example of a possible schematic flowchart of a communication method according to an embodiment of this application. For ease of understanding, FIG. 6 is described from a perspective of interaction between a first apparatus and a second apparatus. The first apparatus and the second apparatus in FIG. 6 may be respectively a receive end and a transmit end of a reference signal. For example, when the solution shown in FIG. 6 is applied to a sending procedure of a downlink reference signal, the first apparatus may be understood as a terminal apparatus, and the second apparatus may be understood as a network apparatus. For example, when the solution shown in FIG. 6 is applied to a sending procedure of an uplink reference signal, the first apparatus may be understood as a network apparatus, and the second apparatus may be understood as a terminal apparatus. The solution shown in FIG. 6 is applied to another communication procedure. The first apparatus and the second apparatus may alternatively be other apparatuses, for example, two terminal apparatuses, two network apparatuses, or two relay apparatuses. The terminal apparatus in embodiments of this application may be the terminal device shown in FIG. 2 or a chip inside the terminal device. The network apparatus in embodiments of this application may be the network device in FIG. 2 (for example, the RAN node, such as the CU or the DU) or a chip in the network device (for example, a chip in the RAN node, such as a chip in the CU or the DU).

The following provides descriptions with reference to FIG. 6.

Step 601: The second apparatus sends at least one reference signal.

Correspondingly, the first apparatus receives the at least one reference signal.

An example in which the second apparatus is the network apparatus, and the first apparatus is the terminal apparatus is used. Optionally, in the radio access network shown in FIG. 2, step 601 may be implemented as follows: A CU-CP corresponding to the network apparatus generates the at least one reference signal, and sends the at least one reference signal by using a DU and an RU. In the O-RAN system, step 601 may be implemented as follows: An O-CU-CP corresponding to the network apparatus generates the at least one reference signal, and sends the at least one reference signal by using an O-DU and an O-RU.

The at least one reference signal may include one reference signal, two reference signals, or more reference signals. For ease of understanding, an example in which the at least one reference signal includes a first reference signal and a second reference signal is used for description in this embodiment of this application.

The first reference signal may correspond to N_{g1} port sets. N_{g1} is a positive integer. N_{g1} may be equal to 1 or may be greater than 1. In a possible implementation, N_{g1} is an integer greater than 1. For example, N_{g1} is 1, 2, 3, or 4. A port set in the N_{g1} port sets includes at least one antenna port. That the first reference signal may correspond to the N_{g1} port sets may also be understood as: The first reference signal is sent through the N_{g1} port sets. A resource may be understood as a resource corresponding to the first reference signal and a port set, may be understood as a resource associated with the first reference signal and the port set, or may be understood as that the second apparatus sends the first reference signal on the resource through the port set.

The second reference signal may correspond to N_{g2} port sets. N_{g2} is a positive integer. N_{g2} may be equal to 1 or may be greater than 1. For example, N_{g2} is an integer greater than 1. For example, N_{g2} is 1, 2, 3, or 4. A port set in the N_{g2} port sets includes at least one antenna port. That the second reference signal may correspond to the N_{g2} port sets may also be understood as: The second reference signal is sent through the N_{g2} port sets. Quantities of port sets corresponding to the two reference signals may be equal or unequal, that is, N_{g1} and N_{g2} are equal or unequal. A resource may be understood as a resource corresponding to the second reference signal and a port set, may be understood as a resource associated with the second reference signal and the port set, or may be understood as that the second apparatus sends the second reference signal on the resource through the port set.

Step 602: The first apparatus sends channel information.

Correspondingly, the second apparatus receives the channel information.

An example in which the second apparatus is the network apparatus, and the first apparatus is the terminal apparatus is used. Optionally, in the radio access network shown in FIG. 2, step 602 may be implemented as follows: The network apparatus receives the channel information by using the DU and the RU. In the O-RAN system, step 602 may be implemented as follows: The network apparatus receives the channel information by using the O-DU and the O-RU.

In this embodiment of this application, the first apparatus may feed back one or more pieces of channel information to the second apparatus. One piece of channel information sent by the first apparatus may be determined based on one reference signal (or a resource of the reference signal). Alternatively, one piece of channel information sent by the first apparatus may be determined based on a plurality of (for example, two or more) reference signals (or resources of the reference signals).

For ease of description, in this embodiment of this application, an example in which the channel information fed back by the first apparatus to the second apparatus includes the channel information is used for description. The channel information may be determined based on the plurality of reference signals, and the plurality of reference signals may be two or more reference signals. For ease of understanding, in this embodiment of this application, an example in which the channel information is determined based on a reference signal sent through a first port set and a reference signal sent through a second port set is used for description. When the channel information is determined based on more port sets or more reference signals (for example, three or four reference signals), related content is similar to that in the solution in which the channel information is obtained based on the two reference signals, and details are not described again.

For example, the channel information may be determined based on at least one of the N_{g1} port sets and at least one of the N_{g2} port sets. The channel information may be determined based on a first reference signal sent through a first port set and a second reference signal sent through a second port set. The first port set belongs to the N_{g1} port sets. The second port set belongs to the N_{g2} port sets. In this example, the first apparatus identifies the first reference signal sent by the second apparatus through the first port set, identifies the second reference signal sent by the second apparatus through the second port set, obtains two pieces of channel information by measuring the first reference signal sent through the first port set and the second reference signal sent through the second port set, and combines the two pieces of channel information, to obtain the channel information.

For example, the channel information may be determined based on first channel information and second channel information, the first channel information is determined based on the first reference signal corresponding to the first port set, and the second channel information is determined based on the second reference signal corresponding to the second port set. For example, the first apparatus may obtain the first channel information based on a resource corresponding to the first reference signal and the first port set (which may be understood as that the second apparatus sends the first reference signal on the resource through the first port set). The first apparatus obtains the second channel information based on a resource corresponding to the second reference signal and the second port set (which may be understood as that the second apparatus sends the second reference signal on the resource through the second port set). The first apparatus determines the channel information based on the first channel information and the second channel information. It can be learned that, in this solution, the first apparatus may respectively obtain a plurality of pieces of channel information based on a plurality of resources, and then combine the channel information corresponding to the plurality of resources, to obtain new channel information. The new channel information may be understood as channel information obtained across the plurality of resources. Because the first apparatus may feed back the channel information across the resources, this solution reduces a quantity of reference signals sent by a second apparatus, thereby reducing resource overhead.

In another possible implementation, the channel information may be determined based on the first channel information, the second channel information, and a combining coefficient, and the combining coefficient is determined based on the first reference signal corresponding to the first port set and the second reference signal corresponding to the second port set. In a process in which the first apparatus generates the channel information, the channel information is determined based on the combining coefficient. The first apparatus may determine the combining coefficient, and combine the first channel information and the second channel information based on the combining coefficient, to obtain the channel information. For example, the combining coefficient is determined based on the first reference signal and the first port set, and the second reference signal and the second port set. The channel information determined based on this can better comply with a real channel status of a cross-resource combination, thereby improving subsequent communication efficiency.

It can be learned that, the first apparatus may obtain the channel information based on the plurality of reference signals. Therefore, in this solution, the first apparatus may also feed back more channel information when the second apparatus sends fewer reference signals. This solution reduces a quantity of reference signals delivered by the first apparatus, thereby reducing resource overhead.

For example, a reference signal is denoted as #k (for example, may be denoted as a reference signal #k, or may be denoted as a resource #k of the reference signal), and a port set is denoted as #g (for example, may be denoted as a port set #g). One reference signal may be sent through one or more streams. For any stream corresponding to the reference signal #k sent through the port set #g, a precoding matrix (or a PMI) corresponding to the stream may be represented as *W(g, k).* The following provides several possible implementations for determining the parameter through Formula (1), Formula (2), and Formula (3): $W \left(g, k\right) = {W}_{p} \left(g, k\right) \times {W}_{1} \left(g, k\right) \times {W}_{2} \left(g, k\right)$ Formula (1) $W \left(g, k\right) = {W}_{p} \left(g, k\right) \times {W}_{1} \left(g, k\right) \times {W}_{2} \left(g, k\right) \times F \left(g, k\right)$ Formula (2)

The following describes parameters related to Formula (1) and Formula (2). *F(g, k)* may be a part of rows (or columns) in an identity matrix (or a discrete Fourier matrix (discrete Fourier transform, DFT) matrix or an inverse discrete Fourier transform (Inverse DFT, IDFT) matrix), *W*₁(*g, k)* is a first-level weight corresponding to the reference signal #k sent through the port set #g, *W*₂(*g, k*) is a second-level weight corresponding to the reference signal #k sent through the port set #g, and *Wₚ*(*g, k*) may be understood as a corresponding combining coefficient when channel information corresponding to the reference signal #k sent through the port set #g and other channel information are combined into one piece of channel information. In an implementation, *Wₚ*(*g, k*) corresponding to one or more #g and one or more #k is a preset matrix or a preset value, for example, *Wₚ*(*g, k*) *=* 1. $W \left(g, k\right) = {W}_{p} \left(g, k\right) \times {W}_{1} \left(g, k\right) \times {{W}^{˜}}_{2} \left(g, k\right) \times {W}_{f}^{H} \left(g, k\right)$ Formula (3)

In Formula (3), a dimension of *W(g, k)* is *P'_{CSI-RS}*(*g, k)* × *N*₃(*g, k);* a dimension of *W*₁(*g*, *k*) is *P'_{CSI-RS}*(*g, k*) × *2L(g,k);* a dimension of ${{W}^{˜}}_{2} \left(g, k\right) \times {W}_{f}^{H} \left(g, k\right)$ is *2L(g,k) × N*₃(*g*, *k*); a dimension of W̃₂(*g, k*) is 2L(*g*, *k) × M*(*g, k*); and a dimension of ${W}_{f}^{H} \left(g, k\right)$ is *M(g, k)* × *N*₃(*g*, *k*), and ${W}_{f}^{H} \left(g, k\right)$ may be *M(g, k)* rows in an IDFT matrix with a dimension of *N*₃(*g*, *k*) × *N*₃(*g*, *k),* or may be referred to as a conjugate of M(*g, k*) columns in a DFT matrix ${W}_{f}^{H} \left(g, k\right)$ with a dimension of *N*₃(*g*, *k*) × *N*₃(*g, k*)*. P'_{CSI -RS}*(*g*, *k*) is a quantity of antenna ports corresponding to the channel information corresponding to the reference signal #k sent through the port set #g.

In a possible implementation, an example in which W₁(*g*, *k*) is two columns (that is, *L(g, k)* = 1) in an oversampled IDFT matrix is used: ${u}_{m} = \left\{\begin{matrix}\left[1 {e}^{\frac{j 2 πm}{{N}_{2} \left(g, k\right) {O}_{2}}} ⋯ {e}^{\frac{j 2 π \left({N}_{2}\left(g, k\right)-1\right) m}{{N}_{2} \left(g, k\right) {O}_{2}}}\right] ; {N}_{2} \left(g, k\right) > 1 \\ 1 ; {N}_{2} \left(g, k\right) = 1\end{matrix}\right.$ ${v}_{l , m} = {\left[{u}_{m} {u}_{m}{e}^{\frac{j 2 πl}{{N}_{1} \left(g, k\right) {O}_{1}}} ⋯ {u}_{m}{e}^{\frac{j 2 π \left({N}_{1}\left(g, k\right)-1\right) l}{{N}_{1} \left(g, k\right) {O}_{1}}}\right]}^{T}$ ${W}_{1} \left(g, k\right) = \left[\begin{matrix}{v}_{l , m} & 0 \\ 0 & {v}_{l , m}\end{matrix}\right]$

*N*₁(*g, k*) is a first dimension of the port set #g corresponding to the reference signal #k, *N*₂(*g, k*) is a second dimension of the port set #g corresponding to the reference signal #k, *O*₁ and *O*₂ are expansion factors (or oversampling factors) of the first dimension and the second dimension respectively, *l* and m respectively correspond to oversampling base indexes of the first dimension and the second dimension, and *P'_{CSI-RS}*(*g*, *k*) *=* 2*N*₁(*g, k*)*N*₂(*g, k).* It should be understood that, a similar manner may be extended to another *L(g, k),* and correspondingly, *2L(g, k)* columns are taken. Related content is not described again.

In this embodiment of this application, the precoding matrix may be calculated based on an objective such as maximizing a capacity or minimizing an error. A simple solution method is: first obtaining ideal precoding, then obtaining a corresponding precoding component matrix based on a structure of any one of the foregoing formulas, and finally reporting parameters corresponding to matrices. In an implementation, the ideal precoding matrix may be obtained by performing singular value decomposition (singular value decomposition, SVD) on a channel matrix or a covariance matrix of the channel matrix, or may be obtained by performing eigenvalue decomposition (eigenvalue decomposition, EVD) on the covariance matrix of the channel matrix based on the ideal precoding matrix. It should be understood that, the foregoing listed manners of determining the precoding matrix are merely examples, and should not constitute any limitation on this application. For example, a channel coefficient corresponding to the reference signal #k sent through the port set #g is *H(g, k).* Singular value decomposition is performed based on H(*g*, *k*)*^{H}*H(*g, k*), and first several eigenvectors (corresponding to the largest eigenvalues) obtained through singular value decomposition are used for precoding.

The following describes an example in which the first apparatus obtains one piece of channel information based on a reference signal sent through the first port set and a reference signal sent through the second port set. It should be understood that, a similar manner may be extended to more port sets and more reference signals.

For example, the combining coefficient in this embodiment of this application may be understood as a coherent combining coefficient, may be understood as a weighting coefficient between two groups of channels, or may be understood as a weighting coefficient of a precoding matrix between two port sets. Correspondingly, an l^{th} data stream xₗ(t) is jointly transmitted through two port sets, and may be expressed through the following Formula (4):$yl \left(t\right) = \left[H0, H1\right] * W * xl \left(t\right) + n \left(t\right)$ Formula (4)

In Formula (4), H₀ represents a channel coefficient corresponding to the first port set, H₁ represents a channel coefficient corresponding to the second port set, and n(t) is noise.

W in Formula (4) may be understood as precoding corresponding to the first port set and the second port set, and may also be referred to as joint precoding. W in Formula (4) may be determined based on at least one of the following: a first-level weight W₁, a second-level weight W₂, and a combining coefficient Wₚ that correspond to the first port set, and a first-level weight W₁, a second-level weight W₂, and a combining coefficient Wₚ that correspond to the second port set.

In a possible implementation, an example in which W₁ is two columns (that is, L = 1) in an oversampled IDFT matrix is used: ${u}_{m} = \left\{\begin{matrix}\left[1 {e}^{\frac{j 2 πm}{{N}_{2} {O}_{2}}} ⋯ {e}^{\frac{j 2 π \left({N}_{2}-1\right) m}{{N}_{2} {O}_{2}}}\right] ; {N}_{2} > 1 \\ 1 ; {N}_{2} = 1\end{matrix}\right.$ $\begin{matrix}{v}_{l , m} = {\left[{u}_{m} {u}_{m}{e}^{\frac{j 2 πl}{{N}_{1} {O}_{1}}} ⋯ {u}_{m}{e}^{\frac{j 2 π \left({N}_{1}-1\right) l}{{N}_{1} {O}_{1}}}\right]}^{T} \\ {W}_{1} = \left[\begin{matrix}{v}_{l , m} & 0 \\ 0 & {v}_{l , m}\end{matrix}\right]\end{matrix}$

*N*₁ is a first dimension of two port sets (the first port set and the second port set), *N*₂ is a second dimension of the two port sets (the first port set and the second port set), *O*₁ and *O*₂ are expansion factors (or oversampling factors) of the first dimension and the second dimension respectively, *l* and m respectively correspond to oversampling base indexes of the first dimension and the second dimension, and *P'_{CSI-RS} =* 2*N*₁*N*₂. It should be understood that, a similar manner may be extended to another *L,* and correspondingly, *2L* columns are taken to form *W*₁. Related content is similar to this. Details are not described again.

In a possible implementation, W is determined through any one of Example 1, Example 2, and Example 3.

Example 1: *W = Wₚ*⊗(*W*₁*W*₂) or $W = {W}_{p} ⊗ \left({W}_{1}{{W}^{˜}}_{2}{W}_{f}^{H}\right)$.

In Example 1, it may be considered that the first-level weight W₁ of the first port set is the same as the first-level weight W₁ of the second port set, the first-level weight W₂ of the first port set is the same as the first-level weight W₂ of the second port set, and W_{P} may be the combining coefficient corresponding to the first port set and the second port set. These definitions may be applied to parameters in the formula of W in Example 1.

In Example 1, a dimension of W is P_{CSI-RS} × N₃, a dimension of W₁ is P_{CSI-RS} × 2L (or is a wideband precoding matrix), and a dimension of ${{W}^{˜}}_{2} {W}_{f}^{H}$ is 2L × **N₃** (corresponding to **W₂** in Release 15, namely, a precoding matrix of each subband). A dimension of **W̃₂** is 2L × M (or is a compressed matrix), and a dimension of ${W}_{f}^{H}$ is M × **N₃** ( ${W}_{f}^{H}$ is M rows in an IDFT matrix with a dimension of **N₃** × **N₃,** that is, a conjugate of M columns in a DFT matrix **W_{f}** with a dimension of **N₃** × **N₃),** where P_{CSI-RS} is a quantity of antenna ports in a port set, M = $\left⌈{p}_{υ}\frac{{N}_{3}}{R}\right⌉$ is a quantity of selected IDFT base vectors, and **N₃** is a quantity of subbands on which the PMI is fed back (or a quantity of PMIs). When finally performing feedback, the first apparatus may need to feed back only a port or DFT codebook information related to **W₁,** IDFT basis selection information related to ${W}_{f}^{H}$, and a non-zero element in **W̃₂.** For more details, refer to 38.214. Details are not described again.

In this embodiment of this application, ⊗ represents a Kronecker product (Kronecker product). Unless otherwise specified, a meaning of ⊗ at another location is the same as that described herein. Details are not described again.

Example 2: $W = \left[\begin{matrix}{α}_{0} W ′ \\ {α}_{1} W "\end{matrix}\right]$*.*

In Example 2, for example, a vector corresponding to the combining coefficient is denoted as *Wₚ* = [α₀, α₁]^{T}, where ${\left‖{W}_{p}\right‖}_{2} = \left|{α}_{0}^{2}\right| + \left|{α}_{1}^{2}\right| = 1$, and $\left[\begin{matrix}{α}_{0} W ′ \\ {α}_{1} W "\end{matrix}\right]$ is a joint precoding matrix of the first port set and the second port set. The first apparatus may obtain the combining coefficient (or the weighting coefficient) in a conventional method. For example, a 1^{st} column of a matrix **V** = **[v₀, v₁]** may be obtained through singular value decomposition corresponding to **[H₀, H₁]: [H₀W₀, H₁W₁]** = U × A × **V^{H},** that is, α = **v₀.**

In Example 2, W' may be considered as a precoding matrix corresponding to the first port set, and W" may be considered as a precoding matrix corresponding to the second port set. The following provides several possible implementations of W' and W".

In an implementation 1 of Example 2, W' = ***W*₁(0, 0)** × ***W*₂(0, 0)** and W" = ***W*₁(1,** 1) **× *W*₂(1, 1).**

***W*₁(0, 0)** is a first-level weight corresponding to a reference signal (for example, a reference signal #0) sent by the second apparatus through the first port set (for example, a port set #0), ***W*₂** (0, 0) is a second-level weight corresponding to the reference signal (for example, the reference signal #0) sent by the second apparatus through the first port set (for example, the port set #0), ***W*₁(1, 1)** is a first-level weight corresponding to a reference signal (for example, a reference signal #1) sent by the second apparatus through the second port set (for example, a port set #1), and ***W*₂(1, 1)** is a second-level weight corresponding to the reference signal (for example, the reference signal #1) sent by the second apparatus through the second port set (for example, the port set #1).

In an implementation 2 of Example 2, $W ′ = {W}_{1} \left(0,0\right) \times {{W}^{˜}}_{2} \left(0,0\right) \times {W}_{f}^{H} \left(0,0\right)$ and **W"** = ***W*₁(1,** 1) × ***W*₂(1, 1).**

In the implementation 2 of Example 2, the formula of W' may be considered as a case in which both a value of g and a value of k in Formula (3) are 0. For meanings of related parameters in the implementation 2 of Example 2, refer to the related descriptions of Formula (3) and the related descriptions of the implementation 1 of Example 2. Details are not described again.

In an implementation 3 of Example 2, W' = ***W*₁(0, 0)** × ***W*₂(0, 0)** and $W " = {W}_{1} \left(1,1\right) \times {{W}^{˜}}_{2} \left(1,1\right) \times {W}_{f}^{H} \left(1,1\right)$ .

In the implementation 3 of Example 2, the formula of W" may be considered as a case in which both a value of g and a value of k in Formula (3) are 1. For meanings of related parameters in the implementation 3 of Example 2, refer to the related descriptions of Formula (3) and the related descriptions of the implementation 1 of Example 2. Details are not described again.

In an implementation 4 of Example 2, $W ′ = {W}_{1} \left(0,0\right) \times {{W}^{˜}}_{2} \left(0,0\right) \times {W}_{f}^{H} \left(0,0\right)$ and $W " = {W}_{1} \left(1,1\right) \times {{W}^{˜}}_{2} \left(1,1\right) \times {W}_{f}^{H} \left(1,1\right)$.

In the implementation 3 of Example 2, the formula of W' may be considered as a case in which both a value of g and a value of k in Formula (3) are 0, and the formula of W" may be considered as a case in which both a value of g and a value of k in Formula (3) are 1. For meanings of related parameters in the implementation 4 of Example 2, refer to the related descriptions of Formula (3). Details are not described again.

Example 3: *W* = *W*₁ × *W*₂ or $W = {W}_{1} \times {{W}^{˜}}_{2} \times {W}_{f}^{H}$.

For related parameters in Example 3, refer to the related descriptions in Example 1. Details are not described again.

In an implementation provided in Example 3, in a possible implementation, the terminal apparatus may consider the first port set and the second port set as a whole, and then uniformly process signals received through all antenna ports in the two port sets.

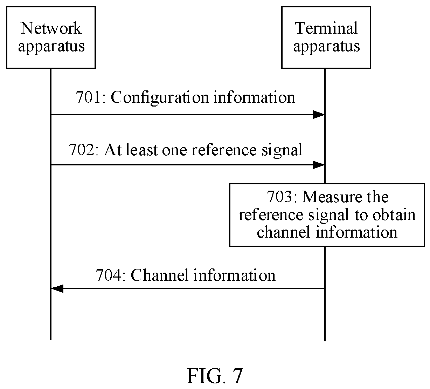

Based on embodiments shown in FIG. 1A, FIG. 1B, FIG. 1C, FIG. 2, FIG. 3, FIG. 4A, FIG. 4B, FIG. 5, and FIG. 6, FIG. 7 shows an example of a possible schematic flowchart of a communication method according to an embodiment of this application. A solution provided in FIG. 7 may be considered as an extended embodiment of the solution provided in FIG. 6. In FIG. 7, an example in which channel information is determined based on a downlink reference signal is used for description. In the example in FIG. 7, an example in which a second apparatus is a network apparatus and a first apparatus is a terminal apparatus is used for description. In the solution provided in FIG. 7, the network apparatus may also be replaced with the second apparatus, and the terminal apparatus may also be replaced with the first apparatus. For descriptions of the terminal apparatus and the network apparatus in FIG. 7, refer to the foregoing descriptions in FIG. 6. Details are not described again.

The following provides descriptions with reference to FIG. 7.

Step 701: The network apparatus sends configuration information to the terminal apparatus.

Correspondingly, the terminal apparatus receives the configuration information.

Optionally, in the radio access network shown in FIG. 2, step 701 may be implemented as follows: A CU-CP corresponding to the network apparatus generates the configuration information, and sends the configuration information by using a DU and an RU. In the O-RAN system, step 701 may be implemented as follows: An O-CU-CP corresponding to the network apparatus generates the configuration information, and sends the configuration information by using an O-DU and an O-RU.

The configuration information in this embodiment of this application may include one or more pieces of information, for example, may include at least one of the following: channel information measurement configuration information (information A1), information (information A2) indicating a reference signal on which channel information is based, and channel information reporting configuration information (information A3). The information may be carried in one piece of information, or may be carried in different pieces of information. For example, the information A1 and the information A3 are carried in one piece of information, and the information A2 is carried in another piece of information. At least one of the information A1, the information A2, and the information A3 may be sent by the network apparatus to the terminal apparatus through RRC signaling or other signaling.

The information A1 is the channel information measurement configuration information.

The channel information measurement configuration information may include resource configuration information. The resource configuration information is information related to a measurement resource, and may be configured by using a three-level structure (resource configuration (resourceConfig)-resource set (resourceSet)-resource (resource)). In other words, the network apparatus may configure one or more resource configurations for the terminal apparatus. Each resource configuration includes one or more resource sets, and each resource set may include one or more resources. Each resource configuration/resource set/resource includes an index. Optionally, the channel information reporting configuration information may further include some other parameters, for example, a periodicity of a resource and a signal type corresponding to the resource.

In a possible implementation, the configuration information may further include information (information A1.1) indicating N_{g1} port sets and/or N_{g2} port sets. The information (the information A1.1) indicating the N_{g1} port sets and/or the N_{g2} port sets may belong to information in the resource configuration information (this is used as an example for description in this embodiment of this application), or may not belong to information in the resource configuration information.

The information A1.1 indicates information about the N_{g1} port sets and/or the N_{g2} port sets.

In this embodiment of this application, one or more antenna elements may form one antenna port. Therefore, an antenna port may be understood as a representation of an antenna element (or an antenna element group). In this embodiment of this application, each reference signal (or a resource of each reference signal) may correspond to one or more antenna ports (which may be understood as: Each reference signal (or a resource of each reference signal) may be sent through one or more antenna ports). An antenna port corresponding to one reference signal may be grouped into one or more sets. In this embodiment of this application, all ports corresponding to one reference signal may be referred to as one port set (or one port group). The port set (or the port group) may be divided into a plurality of port subsets (or port subgroups), and these port subsets (or port subgroups) may also be referred to as port sets (or port groups). In this embodiment of this application, the port set (or the port group) or the port subset (or the port subgroup) may also be referred to as an antenna panel or the like.

In a possible implementation, one reference signal may correspond to one or more antenna port sets, and one antenna port set may also correspond to one or more reference signals. An antenna port set (one or more antenna sets) corresponding to one reference signal may be understood as: The second apparatus sends the reference signal on a resource of the reference signal through the antenna port set (the one or more antenna sets). When one antenna port set corresponds to a plurality of reference signals, the reference signals may occupy the antenna port set in a time division manner, a frequency division manner, or the like.

In this embodiment of this application, port sets in the N_{g1} port sets and the N_{g2} port sets may include one or more antenna ports. The N_{g1} port sets are port sets used to send a first reference signal, and the N_{g2} port sets are port sets used to send the first reference signal. The N_{g1} port sets and the N_{g2} port sets may have an intersection (which may also be referred to as partially overlapping or completely overlapping, that is, having a same antenna port, or the N_{g1} port sets and the N_{g2} port sets being the same), or may have no intersection (which may also be referred to as not overlapping, that is, not having a same antenna port). The two reference signals are different, and antenna port sets corresponding to the two reference signals may not overlap, partially overlap, or completely overlap. A first port set belongs to the N_{g1} port sets. A second port set belongs to the N_{g2} port sets. For example, antenna ports in the first port set and antenna ports in the second port set may partially overlap, do not overlap (which may also be referred to as having no intersection), or completely overlap.

For example, the first port set and the second port set partially overlap or completely overlap. In this case, the first port set and the second port set include at least one same port. For example, the first port set includes a port #01, the second port set includes a port #02, and the port #01 and the port #02 are the same. That the port #01 and the port #02 are the same may mean: The port #01 and the port #02 correspond to a same physical antenna but have different analog weights; or the port #01 and the port #02 correspond to a same physical antenna but a part of digital weight components of the port #01 is different from that of the port #02; or all or a part of QCL parameters corresponding to the port #01 and the port #02 are the same.

Quantities of antenna ports in the two port sets corresponding to the two reference signals may be the same or may be different. For example, a quantity of antenna ports included in at least one of the N_{g1} port sets is different from a quantity of antenna ports included in at least one of the N_{g2} port sets. For another example, a quantity of antenna ports included in at least one (for example, each port set) of the N_{g1} port sets is the same as a quantity of antenna ports included in at least one of the N_{g2} port sets. For another example, quantities of antenna ports in two port sets that have a same index and that correspond to each carrier and each reference signal are the same. For example, a reference signal #1 corresponds to a port set #1, a reference signal #2 also corresponds to the port set #1, and a quantity of antenna ports in the port set #1 corresponding to the reference signal #1 is equal to (or unequal to) a quantity of antenna ports in the port set #1 corresponding to the reference signal #2. In this embodiment of this application, an index of a port set may be determined based on a sequence of locations of antenna ports in port sets. For example, an index of a port set corresponding to antenna ports 0 to (N₁N₂-1) is a port set #1, and an index of a port set corresponding to antenna ports N₁N₂ to (2N₁N₂-1) is a port set #2. In this embodiment of this application, an index of a port set may also be determined according to another rule. This is not limited in this embodiment of this application. For another example, a quantity of ports in a port set corresponding to each carrier and each reference signal may be equal.

In a possible implementation, the N_{g1} port sets include N_{g1,1}*N_{g1,2} port sets. In this embodiment of this application, * in the formula represents multiplication. Unless otherwise specified, for a meaning of * in another formula, refer to the descriptions herein. Details are not described again. N_{g1,1} represents a quantity of port sets included in the N_{g1} port sets in a first dimension, and N_{g1,2} represents a quantity of port sets included in the N_{g1} port sets in a second dimension. N_{g1,1} is a positive integer. N_{g1,2} is a positive integer. It may also be understood as that, the first reference signal is grouped into N_{g1,1} port sets (or port subsets or port subgroups) in the first dimension, and is grouped into N_{g1,2} port sets (or port subsets or port subgroups) in the second dimension. Similarly, in a possible implementation, the N_{g2} port sets include N_{g2,1}*N_{g2,2} port sets. N_{g2,1} indicates a quantity of port sets included in the N_{g2} port sets in the first dimension, N_{g2,2} indicates a quantity of port sets included in the N_{g2} port sets in the second dimension, N_{g2,1} is a positive integer, and N_{g2,2} is a positive integer. N_{g1,1} and N_{g1,2} may be equal or unequal, and/or N_{g2,1} and N_{g2,2} may be equal or unequal.

The information A1.1 may include information indicating the N_{g1} port sets and/or information indicating the N_{g2} port sets.

The information indicating the N_{g1} port sets may include information indicating at least one of the following: a total quantity of antenna ports in the N_{g1} port sets, a quantity of antenna ports in at least one (or each port set) of the N_{g1} port sets, a quantity N_{g1,1} of antenna ports in the first dimension in at least one (or each port set) of the N_{g1} port sets, and a quantity N_{g1,2} of antenna ports in the second dimension in at least one (or each port set) of the N_{g1} port sets.

The information indicating the N_{g2} port sets may include information indicating at least one of the following: a total quantity of antenna ports in the N_{g2} port sets, a quantity of antenna ports in at least one (or each port set) of the N_{g2} port sets, a quantity N_{g2,1} of antenna ports in the first dimension in at least one (or each port set) of the N_{g2} port sets, and a quantity N_{g2,2} of antenna ports in the second dimension in at least one (or each port set) of the N_{g2} port sets.

The information A1.1 may further include other information, for example, one or more carrier indexes corresponding to a reference signal.

The following uses the first reference signal as an example, to describe the N_{g1} port sets corresponding to the first reference signal.

A value of N_{g1,1} and/or a value of N_{g1,2} may be indicated by the network apparatus (for example, may be indicated through a field in the configuration information), or may be determined by the terminal apparatus. Alternatively, a value of N_{g1,1} and/or a value of N_{g1,2} are/is predefined. "Predefined" in embodiments of this application may be understood as being defined in a protocol, or preset in an apparatus (for example, the terminal apparatus and/or the network apparatus).

In another possible implementation, the terminal apparatus may obtain a table, and the table may include one or more groups of values of N_{g1,1} and N_{g1,2}. The table may be indicated by the network apparatus, determined by the terminal apparatus, or predefined. Then, the network apparatus may indicate a group of values of N_{g1,1} and N_{g1,2} in the table to the terminal apparatus, or the terminal apparatus determines a group of values of N_{g1,1} and N_{g1,2}. If the value of N_{g1,1} and/or the value of N_{g1,2} are/is determined by the terminal apparatus, the terminal apparatus may report the value of N_{g1,1} and/or the value of N_{g1,2} to the network apparatus, for example, may send, to the network apparatus, information indicating the value of N_{g1,1} and/or the value of N_{g1,2}. The following shows several possible examples of the value of N_{g1,1} and the value of N_{g1,2} through Table 1. A second row in Table 1 is used as an example for description. When a value carried in a specified field of the network apparatus is 0 (the specified field indicates a group of values of N_{g1,1} and N_{g1,2} in the table), the terminal apparatus may search the table, to determine that N_{g1,1} indicated by the network apparatus is 1 and N_{g1,2} indicated by the network apparatus is 1. Content in another row is similar to this. Details are not described again. In this embodiment of this application, information that is sent by the network apparatus and that indicates the value of N_{g1,1} and the value of N_{g1,2} may be carried in the configuration information, or may be carried in other information. Rows and columns of tables (for example, Table 1 and a subsequent Table 2) in embodiments of this application may be randomly deformed or combined, and parameters in the tables may also be replaced with other values.

**Table 1 Several possible examples of a value of N_{g1,1} and a value of N_{g1,2}**

| Value of a specified field in information sent by a network apparatus | N_{g1,1} | N_{g1,2} |
|---|---|---|
| 0 | 1 | 1 |
| 1 | 1 | 2 |
| 2 | 1 | 3 |
| 3 | 1 | 4 |
| 4 | 2 | 1 |
| 5 | 2 | 2 |
| 6 | 2 | 3 |
| 7 | 2 | 4 |
| 8 | 3 | 1 |
| 9 | 3 | 2 |
| 10 | 4 | 1 |
| 11 | 4 | 2 |

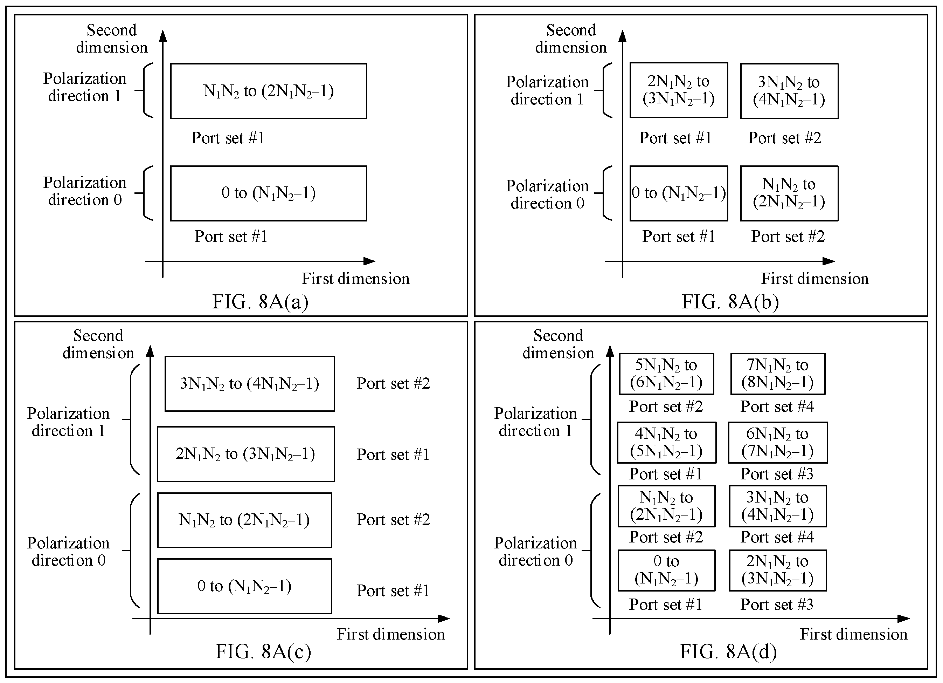

FIG. 8A(a) to FIG. 8A(d) show an example of a possible diagram of a division manner of a port set corresponding to a first reference signal according to an embodiment of this application. In FIG. 8A(a) to FIG. 8A(d), an example in which a quantity of antenna ports included in each port set (one port subset or port subgroup) is 2N₁N₂ (2N₁N₂ may also be understood as twice a product of N_{1*}N₂) is used for description. In this embodiment of this application, an example in which the first reference signal corresponds to P_{CSI-RS} antenna ports is used for description. P_{CSI-RS}=N_{g1,1}*N_{g1,2}*2*N₁*N₂. The P_{CSI-RS} antenna ports may be grouped in two polarization directions, and quantities of antenna ports in the two polarization directions are equal. As shown in FIG. 8A(a), the first reference signal includes one port set, namely, a port set #1, where a value of N_{g1} is 1, a value of N_{g1,1} is 1, and a value of N_{g1,2} is 1. The port set #1 includes all antenna ports from an antenna port #0 to an antenna port (2N₁N₂-1). It can be learned from FIG. 8A(a) that, the port set includes antenna ports in two polarization directions, and the two polarization directions are a polarization direction #0 and a polarization direction #1 respectively. Quantities of antenna ports in both the polarization directions are equal, namely, N₁N₂. As shown in the figure, antenna ports in the polarization direction #0 include all antenna ports from the antenna port #0 to an antenna port (N₁N₂-1), and antenna ports in the polarization direction #1 include all antenna ports from an antenna port #N₁N₂ to the antenna port (2N₁N₂-1). For examples of FIG. 8A(b), FIG. 8A(c), and FIG. 8A(d), refer to the related descriptions of FIG. 8A(a). For example, in FIG. 8A(b), an example in which the first reference signal corresponds to two port sets (namely, a port set #1 and a port set #2), there are two sets (that is, N_{g1,1} is 2) in a first dimension, and there is one set (that is, N_{g1,2} is 1) in a second dimension is used for illustration. For example, in FIG. 8A(b), an example in which the first reference signal corresponds to two port sets (namely, a port set #1 and a port set #2), there is one set (that is, N_{g1,1} is 1) in a first dimension, and there are two sets (that is, N_{g1,2} is 2) in a second dimension is used for illustration. For example, in FIG. 8A(b), an example in which the first reference signal corresponds to four port sets (namely, a port set #1, a port set #2, a port set #3, and a port set #4), there are two sets (that is, N_{g1,1} is 2) in a first dimension, and there are two sets (that is, N_{g1,2} is 2) in a second dimension is used for illustration.

In this embodiment of this application, antenna ports included in one port set may be ports whose indexes are consecutive or inconsecutive. If the indexes of the antenna ports are consecutive, in this embodiment of this application, the indexes may be expressed by using a start antenna port number and an end antenna port number of consecutive antenna port numbers in the port set. For example, a port set includes antenna ports 0 to 3, and 0 to 3 may be understood as including 0, 3, and numbers between 0 and 3. This example may be understood as that, the antenna ports included in the port set are an antenna port whose index is 0, an antenna port whose index is 1, an antenna port whose index is 2, and an antenna port whose index is 3. If the indexes of the antenna ports are inconsecutive, indexes of antenna port numbers included in the port set may be separately listed. For example, if a port set includes antenna ports {0, 1, 3}, it may be understood as that, the antenna ports included in the port set are an antenna port whose index is 0, an antenna port whose index is 1, and an antenna port whose index is 3. Meanings of examples of antenna port numbers displayed at other locations in this embodiment of this application are similar to those of the examples. Unless otherwise specified in this specification, refer to the descriptions of the examples herein. Details are not described again.

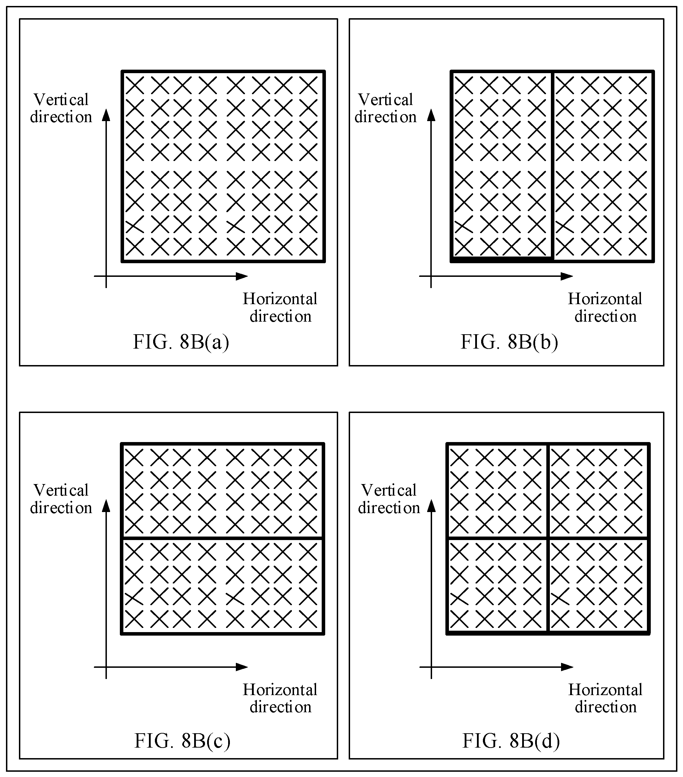

In a possible implementation, the first dimension and the second dimension may be understood as two directions. For example, for a planar antenna array, the first dimension may be considered as an antenna port in a horizontal direction, and the second dimension may be considered as an antenna port in a vertical direction; or vice versa. For ease of understanding, FIG. 8B(a) to FIG. 8B(d) show an example of a diagram of structures of several possible antenna panels according to an embodiment of this application. As shown in FIG. 8B(a), an antenna panel included in the network apparatus may be a single panel, and this may also be understood as that, there is one port set in the first dimension, and there is also one port set in the second dimension. As shown in FIG. 8B(b), an antenna panel included in the network apparatus may include two panels in a horizontal direction, and this may also be understood as that, there are two port sets in the first dimension, and there is one port set in the second dimension. As shown in FIG. 8B(c), an antenna panel included in the network apparatus may include two panels in a vertical direction, and this may also be understood as that, there is one port set in the first dimension, and there are two port sets in the second dimension. As shown in FIG. 8B(d), an antenna panel included in the network apparatus includes two panels in a vertical direction and two panels in a horizontal direction respectively, and this may also be understood as that, there are two port sets in the first dimension, and there are two port sets in the second dimension.

In another possible implementation, quantities of antenna ports in at least two port sets used to transmit the first reference signal are different. For example, quantities of antenna ports in any two port sets used to transmit the first reference signal are different. For example, the first reference signal corresponds to N_{g1} port sets, and quantities of antenna ports sequentially included in the N_{g1} port sets may be represented as: 2N₁(1)N₂(1), 2N₁(2)N₂(2), ..., and 2N₁(N_{g1})N₂(N_{g1}). A port quantity corresponding to one reference signal may be represented as ***P_{CSI-RS}* = Σ_{*g*=1,2,...,Ng1} 2*N*₁(*g*)*N*₂(*g*).**

In the foregoing example, the first reference signal is used as an example to describe division of a port set corresponding to the first reference signal. For division of a port set corresponding to the second reference signal, refer to the division manner of the port set corresponding to the first reference signal. Details are not described again.

In this embodiment of this application, one reference signal may correspond to one spatial relation. The "spatial relation" in this embodiment of this application may also be replaced with a "beam", an "analog beam", or a "transmit filter". Two reference signals may correspond to two different or same spatial relations. For example, a spatial relation corresponding to at least one of N_{g1} port sets is different from a spatial relation corresponding to at least one of N_{g2} port sets (for example, a spatial relation corresponding to a first port set is different from a spatial relation corresponding to a second port set); or a spatial relation corresponding to at least one of N_{g1} port sets is the same as a spatial relation corresponding to at least one of N_{g2} port sets.

In another possible implementation, spatial relations corresponding to at least two port sets corresponding to one reference signal may be the same or different. For example, at least two of N_{g1} port sets correspond to different spatial relations. For another example, at least two (for example, each port set) of N_{g1} port sets correspond to a same spatial relation. For another example, at least two of N_{g2} port sets correspond to different spatial relations. For another example, at least two (for example, each port set) of N_{g2} port sets correspond to a same spatial relation.

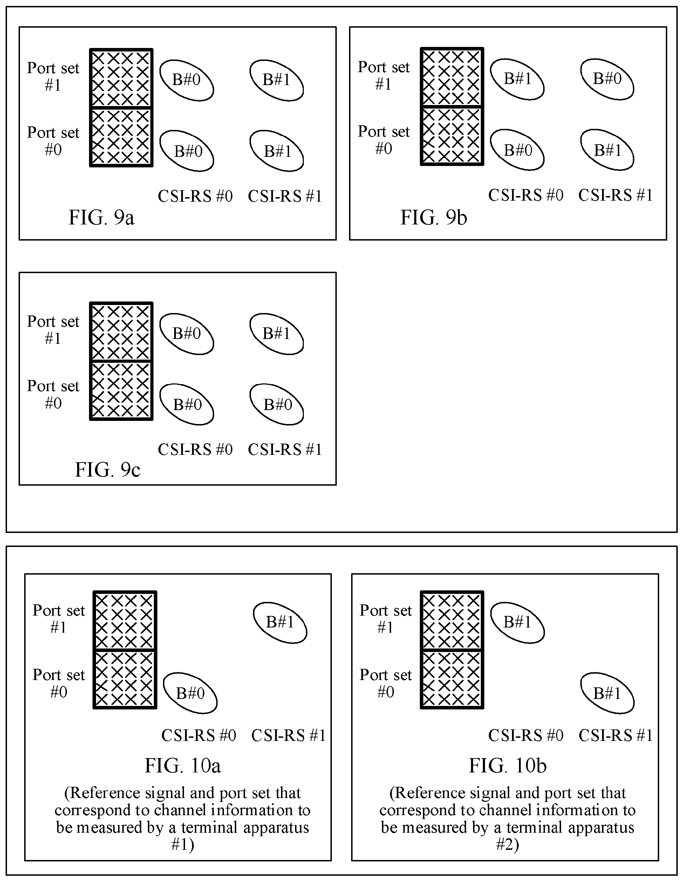

In this embodiment of this application, one port set may correspond to one or more spatial relations (or referred to as analog beams). For example, a quantity of spatial relations (or beams) associated with a reference signal sent through one port set may be 1, 2, 4, or 8. FIG. 9a to FIG. 9c below show a possible example of a port set and a beam (or a spatial relation) according to an embodiment of this application. For ease of understanding, in FIG. 9a to FIG. 9c, an example in which one port set corresponds to one spatial relation, a first reference signal is a CSI-RS #0, a second reference signal is a CSI-RS #1, the first reference signal corresponds to a port set #1 and a port set #2, and the second reference signal corresponds to the port set #1 and the port set #2 is used. In this embodiment of this application, antenna ports in the port set #1 and antenna ports in the port set #2 may partially overlap, completely overlap, or do not overlap. For related content, refer to the foregoing descriptions of the first port set and the second port set. In this embodiment of this application, an example in which the antenna ports in the port set #1 and the antenna ports in the port set #2 do not overlap is used for description. For example, refer to FIG. 8A(b). For example, the port set #1 corresponding to the CSI-RS #0 may include 0 to (N₁N₂-1) and 2N₁N₂ to (3N₁N₂-1). For example, the port set #2 corresponding to the CSI-RS #1 may include N₁N₂ to (2N₁N₂-1) and 3N₁N₂ to (4N₁N₂-1).

In this embodiment of this application, a port set (for example, at least two port sets or each port set) corresponding to one reference signal is associated with one spatial relation (or beam), and spatial relations (which may also be described as spatial relations associated with reference signals) associated with at least two reference signals (for example, the first reference signal and the second reference signal) are different. For example, as shown in FIG. 9(a), the network apparatus sends the CSI-RS #0 through the port set #0 and the port set #1, and a beam of the CSI-RS #0 sent through the port set #0 and the port set #1 is B#0. The network apparatus sends the CSI-RS #1 through the port set #0 and the port set #1, and a beam of the CSI-RS #1 sent through the port set #0 and the port set #1 is B#1. In this embodiment of this application, two reference signals (for example, the CSI-RS #0 and the CSI-RS #1) may be sent in a time division manner or a frequency division manner.

In another possible implementation, spatial relations associated with a same port set corresponding to at least two reference signals may be different, and spatial relations (or beams) associated with two port sets corresponding to one reference signal may be different. For example, as shown in FIG. 9(b), a beam of the CSI-RS #0 sent by the network apparatus through the port set #0 is B#0, a beam of the CSI-RS #0 sent by the network apparatus through the port set #1 is B#1, a beam of the CSI-RS #1 sent by the network apparatus through the port set #0 is B#1, and a beam of the CSI-RS #1 sent by the network apparatus through the port set #1 is B#0.

In another possible implementation, spatial relations associated with a same port set corresponding to at least two reference signals may be the same or different, and spatial relations (or beams) associated with two port sets corresponding to one reference signal may be different. For example, as shown in FIG. 9(c), a beam of the CSI-RS #0 sent by the network apparatus through the port set #0 and the port set #1 is B#0, a beam of the CSI-RS #1 sent by the network apparatus through the port set #0 is B#0, and a beam of the CSI-RS #1 sent by the network apparatus through the port set #1 is B#1.

The information A2 is information indicating the reference signal on which the channel information is based.

In this embodiment of this application, the terminal apparatus may determine the channel information based on one reference signal (referring to an implementation A2.1), or may determine the channel information based on a plurality of reference signals (referring to an implementation A2.2).

In the implementation A2.1, the terminal apparatus may determine the channel information based on one reference signal.

In the implementation A2.1, the configuration information (for example, the information A2) may further indicate the terminal apparatus to determine the channel information based on one reference signal.

For example, the configuration information (for example, the information A2) may include indication information of one reference signal. For example, the information A2 may include information about a resource of the reference signal, for example, a resource identifier and/or a resource set identifier of the reference signal. The first apparatus may determine the channel information based on a first reference signal sent through one or more port sets.

One reference signal may correspond to one or more port sets, and the first apparatus may determine the channel information based on the one or more port sets corresponding to the reference signal. For example, the first reference signal is sent through a port set #0, a port set #1, and a port set #2, and the information A2 may indicate the terminal apparatus to determine the channel information based on all the port sets or some port sets (for example, the port set #0 and the port set #2) corresponding to the first reference signal.

In another possible implementation, the configuration information (for example, the information A2) may include indication information of one or more port sets. The port set indicated by the information A2 corresponds to one reference signal. In this case, the first apparatus may determine the channel information based on the reference signal sent through the port set indicated by the information A2.

In another possible implementation, the configuration information (for example, the information A2) may include indication information of a reference signal and indication information of one or more port sets. The port set indicated by the information A2 corresponds to the reference signal indicated by the information A2. In this case, the first apparatus may determine the channel information based on the reference signal sent through the port set indicated by the information A2. The port set indicated by the information A2 may be all or a part of port sets corresponding to the reference signal.

In the implementation A2.2, the terminal apparatus may determine the channel information based on the plurality of reference signals.

The configuration information (for example, the information A2) may further indicate the terminal apparatus to determine the channel information based on the plurality of reference signals. For example, the information A2 may indicate to determine the channel information based on a first reference signal and a second reference signal. After receiving the information A2, the terminal apparatus may determine that the channel information needs to be determined based on the first reference signal and the second reference signal, for example, determine the channel information, and then feed back the channel information to the network apparatus.

In a possible implementation, the configuration information (for example, the information A2) may include indication information of the first reference signal and indication information of the second reference signal. Based on the information, the terminal apparatus may determine reference signals needed for generating the channel information. In this embodiment of this application, the indication information of the first reference signal may include information that can indicate a resource of the first reference signal, for example, may include a resource set identifier of the first reference signal and/or a resource identifier of the first reference signal. In this embodiment of this application, the indication information of the second reference signal may include information that can indicate a resource of the second reference signal, for example, may include a resource set identifier of the second reference signal and/or a resource identifier of the second reference signal. The resource set identifier of the first reference signal is different from the resource set identifier of the second reference signal; and/or the resource identifier of the first reference signal is different from the resource identifier of the second reference signal.

For example, the configuration information (for example, the information A2) includes {CSI-RS #0; CSI-RS #1}. In this case, a terminal apparatus #1 needs to obtain channel information based on a combination form of {CSI-RS #0; CSI-RS #1}. In other words, the terminal apparatus #1 may determine the channel information corresponding to the CSI-RS #0 and the CSI-RS #1. In this example, one reference signal may correspond to one or more port sets. The terminal apparatus #1 may determine the channel information corresponding to the CSI-RS #0 sent through all port sets used to send the CSI-RS #0 and the CSI-RS #1 sent through all port sets used to send the CSI-RS #1. In a possible implementation, one reference signal may correspond to one port set. In this case, the information A2 may include {CSI-RS #0; CSI-RS #1}, or may not include information about a port set corresponding to each reference signal. For example, the CSI-RS #0 corresponds to a port set #0, and the CSI-RS #1 corresponds to a port set #1. After receiving the information A2, the terminal apparatus may determine that the channel information corresponding to the CSI-RS #0 sent through the port set #0 and the CSI-RS #1 sent through an antenna port in the port set #1 needs to be obtained.

In another possible implementation, the configuration information (for example, the information A2) may include indication information of a first port set and indication information of a second port set. One port set may be associated with one reference signal. Based on the information, the terminal apparatus may determine a plurality of port sets needed for generating the channel information, and then obtain, based on a plurality of reference signals sent through the plurality of port sets, the channel information corresponding to the plurality of reference signals.

In another possible implementation, the configuration information (for example, the information A2) may include: indicating to determine the channel information based on a first reference signal sent through the first port set and a second reference signal sent through the second port set. Based on the information, the terminal apparatus may determine reference signals that need to be measured and a port set corresponding to each reference signal. For example, the terminal apparatus may identify the first reference signal sent through the first port set, may also identify the second reference signal sent through the second port set, and then perform measurement based on the two signals, to obtain the channel information.

In this implementation, the configuration information (for example, the information A2) may include indication information of the first port set, indication information of the first reference signal, indication information of the second port set, and indication information of the second reference signal. The indication information of the first port set includes at least one of the following: an index of an antenna port in the first port set, an index of the first port set, an index of a start antenna port in the first port set, information about a quantity of antenna ports included in the first port set, and an index of an end antenna port in the first port set. The indication information of the second port set may include at least one of the following: an index of an antenna port in the second port set, an index of the second port set, an index of a start antenna port in the second port set, information about a quantity of antenna ports included in the second port set, and an index of an end antenna port in the second port set.

In this embodiment of this application, the network apparatus may configure, through the configuration information, a combination form of reference signals that need to be measured by one terminal apparatus, or may configure, through one piece of configuration information (or a plurality of pieces of configuration information), a combination form of reference signals that need to be measured by a plurality of terminal apparatuses. In a possible implementation, the network apparatus may configure, for the plurality of terminal apparatuses through the configuration information, a combination form of reference signals that need to be measured by the terminal apparatuses. Reference signals that need to be measured by different terminal apparatuses may be partially the same, completely the same, or different. When reference signals measured by two terminal apparatuses are the same, port sets corresponding to the reference signals that need to be measured by the two terminal apparatuses may be partially the same, completely the same, or different.

For example, a terminal apparatus #1 needs to obtain channel information based on a combination form of {CSI-RS #0, 0 to (N₁N₂-1); CSI-RS #1, N₁N₂ to (2N₁N₂-1)}; a terminal apparatus #2 needs to obtain channel information based on a combination form of {CSI-RS #0, N₁N₂ to (2N₁N₂-1); CSI-RS #1, 0 to (N₁N₂-1)}; and a terminal apparatus #3 needs to obtain channel information based on a combination form of {CSI-RS #0, 0 to (N₁N₂-1); CSI-RS #0, N₁N₂ to (2N₁N₂-1)}. Combination forms of beams (or spatial relations) associated with port sets corresponding to a plurality of reference signals that need to be measured by different terminal apparatuses may be the same or may be different.

For example, a beam (or a spatial relation) corresponding to a CSI-RS #0 sent by the network apparatus through a port set 0 to (N₁N₂-1) is B#0, a beam (or a spatial relation) corresponding to the CSI-RS #0 sent by the network apparatus through a port set N₁N₂ to (2N₁N₂-1) is B#0, a beam (or a spatial relation) corresponding to a CSI-RS #1 sent by the network apparatus through the port set 0 to (N₁N₂-1) is B#1, and a beam (or a spatial relation) corresponding to the CSI-RS #1 sent by the network apparatus through the port set N₁N₂ to (2N₁N₂-1) is B#1. Based on this, a beam combination form corresponding to the channel information obtained by the terminal apparatus #1 is {B#0, 0 to (N₁N₂-1); B#1, N₁N₂ to (2N₁N₂-1)} (the beam combination form may be understood as that a beam of ports 0 to (N₁N₂-1) is B#0, and a beam of ports N₁N₂ to (2N₁N₂-1) is B#1. A meaning of another beam combination form is similar to this, and details are not described again). A beam combination form corresponding to the channel information obtained by the terminal apparatus #2 is {(B#1, 0 to (N₁N₂-1); B#0, N₁N₂ to (2N₁N₂-1)}, and a beam combination form corresponding to the channel information obtained by the terminal apparatus #3 is {B#0, 0 to (N₁N₂-1); B#0, N₁N₂ to (2N₁N₂-1)}.

It can be learned that, the network apparatus sends the CSI-RS #0 only through B#0 and sends the CSI-RS #1 through B#1, so that beam combination form requirements of a plurality of terminal apparatuses can be met. In this solution, the network apparatus does not need to separately send a reference signal for each beam combination requirement. For example, in the foregoing example, the network apparatus only needs to send the CSI-RS #0 through the port set 0 to (2N₁N₂-1) and the beam B#0, and send the CSI-RS #1 through the port set 0 to (2N₁N₂-1) and the beam B#1, so that beam combination requirements of the terminal apparatus #1, the terminal apparatus #2, and the terminal apparatus #3 can be met. In other words, the network apparatus does not need to send a CSI-RS #3 (a beam combination form for the CSI-RS #3 is {B#0, 0 to (N₁N₂-1); B#1, N₁N₂ to (2N₁N₂-1)}, that is, the CSI-RS #3 is sent through ports 0 to (2N₁N₂-1), a beam of the ports 0 to (N₁N₂-1) is B#0, and a beam of the ports N₁N₂ to (2N₁N₂-1) is B#1), and does not need to send a CSI-RS #4 (a beam combination form for the CSI-RS #4 is {(B#1, 0 to (N₁N₂-1)); B#0, N₁N₂ to (2N₁N₂-1)}). It can be learned that, in this solution, the network apparatus sends fewer reference signals, so that beam combination requirements of a large quantity of terminal apparatuses can be met, thereby reducing resource overhead.

In this embodiment of this application, an example in which a reference signal is a CSI-RS is used for description, and the CSI-RS may also be replaced with a resource of the CSI-RS. To meet measurement requirements of a plurality of terminal apparatuses for channel information, in the solution provided in this embodiment of this application, the network apparatus may reduce a quantity of sent reference signals, and a terminal apparatus may obtain channel information based on a single reference signal or a plurality of reference signals and based on requirements of the terminal apparatus, so that resource overhead can be reduced. For analysis of related beneficial effects, refer to the related descriptions in FIG. 5. Details are not described again. The "association" in embodiments of this application may also be replaced with another term, for example, correspondence, correlation, or reciprocity.

For ease of understanding, FIG. 10a and FIG. 10b show an example of a possible relationship diagram of a reference signal and a port set that correspond to channel information measured by a terminal apparatus according to an embodiment of this application. For example, a reference signal sent by a network apparatus may be shown in FIG. 5. As shown in FIG. 10(a), information A2 may include: {(CSI-RS #0, port set #0); (CSI-RS #1, port set #1)}. Based on the information, a terminal apparatus #1 may determine channel information corresponding to the CSI-RS #0 that needs to be sent through an antenna port in the port set #0 and the CSI-RS #1 sent through an antenna port in the port set #1. As shown in FIG. 10(b), the information A2 may further include: {(CSI-RS #0, port set #1); (CSI-RS #1, port set #0)}. Based on the information, a terminal apparatus #2 may determine channel information corresponding to the CSI-RS #0 that needs to be sent through an antenna port in the port set #1 and the CSI-RS #1 sent through an antenna port in the port set #0. In this example, the CSI-RS #0 and the CSI-RS #1 may be considered as indication information of a reference signal (or a resource of the reference signal). The port set #1 may include, for example, antenna ports whose indexes are 0 to (N₁N₂-1), and the port set #2 may include, for example, antenna ports whose indexes are N₁N₂ to (2N₁N₂-1).

In this embodiment of this application, an example in which a quantity of reference signals corresponding to the channel information obtained by the terminal apparatus is two is used. During actual application, the terminal apparatus may obtain the channel information based on more than two reference signals. In addition, a quantity of port sets associated with one reference signal corresponding to the channel information may be one or more, and quantities of port sets associated with at least two reference signals corresponding to the channel information may be equal or unequal.

In a possible implementation, content of the configuration information sent by the network apparatus may be shown in the following Example 1. In Example 1, an example in which measurement of {(reference signal 1, port set 1); (reference signal 2, port set 2)} needs to be performed is used for illustration. The reference signal 1 may also be replaced with a resource 1 of the reference signal, and the reference signal 2 may also be replaced with a resource 2 of the reference signal.

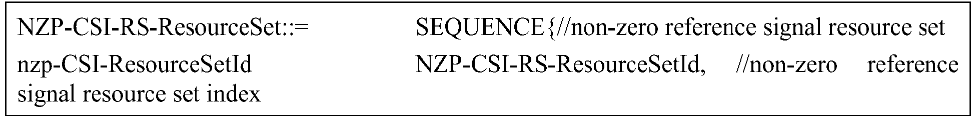

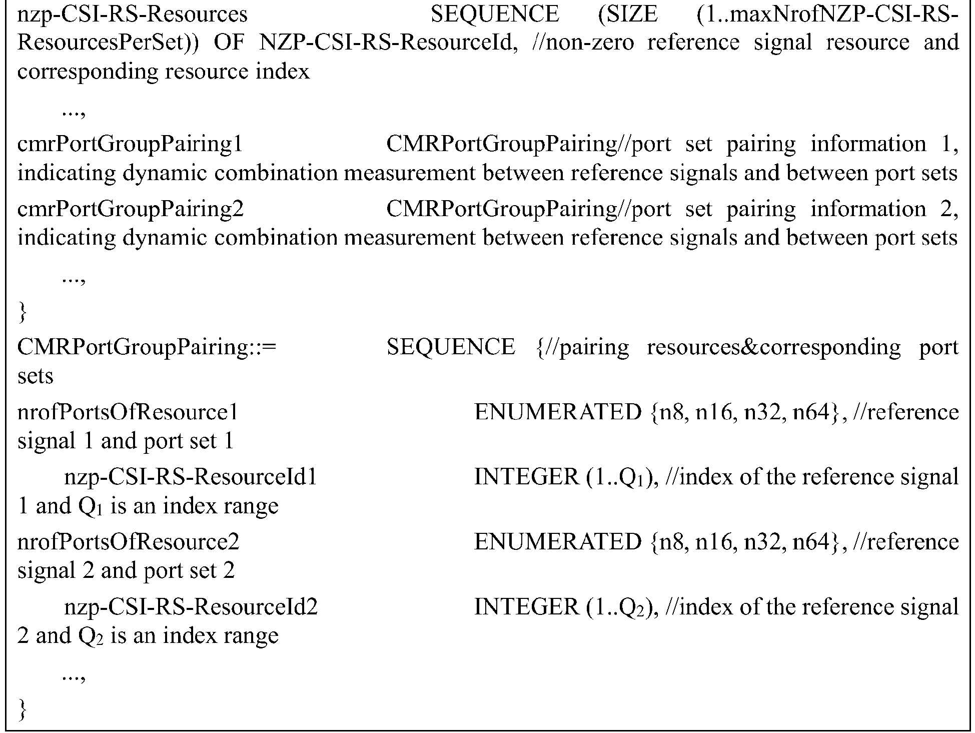

In a possible implementation, information indicating a port set may include an index of the port set. For example, a part of content in Example 1 may be replaced with the following content:

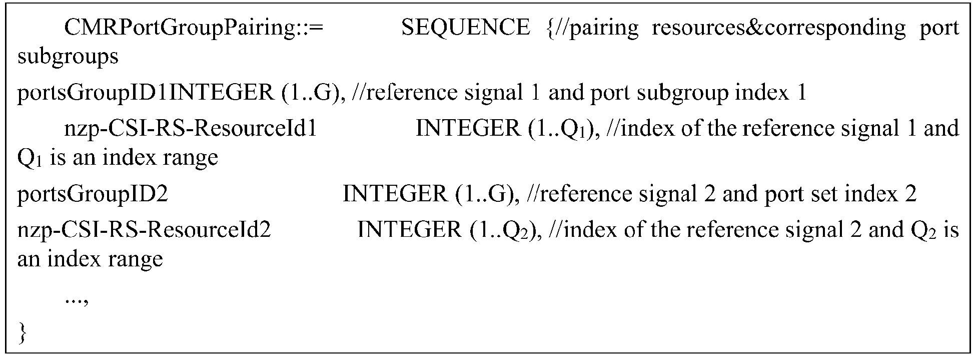

In a possible implementation, information indicating a port set may include an index of a start antenna port in the port set and/or a quantity of antenna ports included in the port set. For example, a part of content in Example 1 may be replaced with the following content:

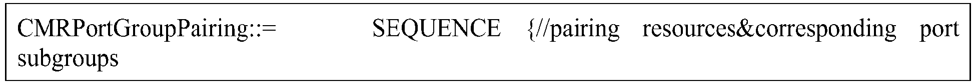

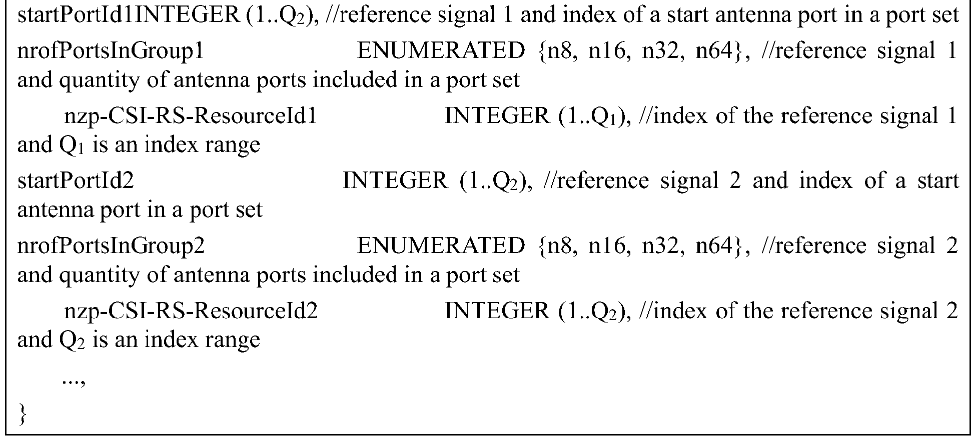

Based on the foregoing example, in a possible example, indexes of antenna ports in a port set may include, for example, startPortId1 to (startPortId1+nrofPortsInGroup1-1), or indexes of antenna ports in a port set may include, for example, startPortId1 to (startPortId1+nrofPortsInGroup1/2-1) and ( $\frac{{P}_{CSI - RS}}{2} + startPortId 1$) to ( $\frac{{P}_{CSI - RS}}{2} + startPortId 1 + nrofPortsInGroup 1 / 2 - 1$) respectively. The two parameters respectively correspond to quantities of antenna ports in two polarization directions. startPortId1 may be understood as an index of a start antenna port in the port set, nrofPortsInGroup1 may be understood as a quantity of antenna ports included in the port set, and P_{CSI-RS} may be understood as a total quantity of antenna ports corresponding to one reference signal (or one reference signal).

In another possible implementation, the information A2 may be determined by the terminal apparatus. For example, the terminal apparatus may determine a reference signal associated with the channel information that needs to be obtained, or determine a reference signal and a port set that are associated with the channel information that needs to be obtained. In this implementation, the network apparatus may not need to send the foregoing information A2. The terminal apparatus may further send the determined information A2 to the network apparatus, so that the network apparatus obtains the reference signal and the port set that correspond to the channel information. In this solution, because the terminal apparatus can determine the reference signal and the port set that are associated with the channel information, the terminal apparatus may determine a reference signal and port set combination form that is beneficial to the terminal apparatus, so that the network apparatus can configure a resource for the terminal apparatus based on channel information corresponding to the combination form, thereby optimizing communication performance of the terminal apparatus.

In an implementation, the second apparatus may further determine, based on network configuration information, a manner of determining the information A2.

The information A3 is the channel information reporting configuration information.

The channel information reporting configuration information is information related to reporting of a measurement result, and is configured through a reporting configuration (ReportConfig) in a protocol. The network apparatus may configure one or more reporting configurations (ReportConfig) for the terminal apparatus. Each reporting configuration may include an amount of channel information that needs to be reported and/or a PMI configuration corresponding to the channel information. For example, the PMI configuration may include a parameter related to PMI reporting.

The terminal apparatus may obtain a plurality of pieces of channel information, and channel information reported by the terminal apparatus may be all or a part of the obtained plurality of pieces of channel information. In this embodiment of this application, the configuration information may further indicate a reference signal on which the channel information that the terminal apparatus needs to report is based. The information is similar to the foregoing information A2 (content indicated by the foregoing information A2 may be understood as a reference signal on which the channel information that the terminal apparatus needs to obtain is based). Details are not described again. For example, information indicating the reference signal on which the channel information that the terminal apparatus needs to report is based may include: indication information of at least one reference signal, and indication information of a port set associated with a reference signal in the at least one reference signal. For example, the information indicating the reference signal on which the channel information that the terminal apparatus needs to report is based may include: {CSI-RS #0, 0 to (N₁N₂-1); CSI-RS #1, N₁N₂ to (2N₁N₂-1)}. For related content, refer to the foregoing descriptions. Details are not described again.

For example, the reporting configuration may further include reporting-related information such as a reporting indicator, reporting time, a reporting periodicity, and a reporting format. In addition, the reporting configuration further includes a resource configuration index indicating a measurement configuration used to obtain a reported result through measurement. Optionally, the channel information reporting configuration information includes codebook configuration information (CodebookConfig).

Step 702: The network apparatus sends at least one reference signal.

Correspondingly, the terminal apparatus receives the at least one reference signal.

In an implementation, the at least one reference signal may belong to a same resource set.

In an implementation, the at least one reference signal may be located in adjacent slots, adjacent downlink slots, or adjacent downlink OFDM symbols.

The reference signal sent by the network apparatus in step 702 may be understood as a downlink reference signal.

For example, the network apparatus sends a downlink signal (which is generally the downlink reference signal) on a resource configured based on resource configuration information, so that the terminal apparatus can measure the downlink signal, and determine quality of each resource (namely, quality of a beam corresponding to the resource).

In an implementation, different port sets of a same reference signal or different reference signals may be sent in a time division method, that is, sent on different time domain resources (namely, slots or OFDM symbols). The time division manner can facilitate sending of a plurality of reference signals based on different beams in an HBF architecture, to implement channel information measurement.

In an implementation, different port sets of a same reference signal or different reference signals may be sent in a frequency division method, that is, sent on different frequency domain resources (namely, component carriers, resource blocks, or different subcarriers). For example, a reference signal #1 is sent on a first frequency domain resource, and a reference signal #2 is sent on a second frequency domain resource. In this implementation, the network apparatus can quickly scan the channel information.

For related content of step 702, refer to the related descriptions of step 601. Details are not described again.

Step 703: The terminal apparatus measures the reference signal, to obtain the channel information.

For example, the terminal apparatus may measure the reference signal based on the information in the foregoing configuration information. For example, if the configuration information indicates the terminal apparatus to obtain the channel information based on the first reference signal corresponding to the first port set and the second reference signal corresponding to the second port set, the terminal apparatus receives the first reference signal and the second reference signal, and identifies and measures the first reference signal corresponding to the first port set and the reference signal corresponding to the second port set, to obtain the channel information. For ease of differentiation, in this embodiment of this application, the channel information obtained based on the first reference signal corresponding to the first port set and the reference signal corresponding to the second port set is also referred to as the channel information. In this embodiment of this application, the channel information may be referred to as a channel response.

In step 703, the terminal apparatus may first obtain X groups of channel information, where X may be a positive integer. Then, the terminal apparatus may split and combine the X groups of channel information to form M groups of channel information, so as to facilitate reporting (compression, quantization, and the like, to reduce feedback overhead and improve feedback efficiency).

M may be a positive integer, and M may be less than X, may be greater than X, or may be equal to X. An example in which the network apparatus sends J reference signals is used below. Two possible implementations of obtaining the M groups of channel information are obtained in the following manner 1 and manner 2, where J may be a positive integer, and X may be greater than J, may be equal to J, or may be less than J.

Manner 1: For example, the network apparatus sends the J reference signals, and the terminal apparatus may obtain X (in this example, X=J) groups of channel information based on the J reference signals. For example, each reference signal may correspond to one analog beam, and the J reference signals may be used to obtain channel information of J analog beams.

Manner 2: For example, the network apparatus sends the J reference signals, and the terminal apparatus may obtain X (in this example, X is greater than J) groups of channel information based on the J reference signals.

For example, the J reference signals may be used to obtain J pieces of channel information (or referred to as K channel coefficients or channel responses), and the J pieces of channel information may be respectively denoted as **A₀, A₁, ... A*ⱼ* ... , A**_{(**J-1**)}, where **A*ⱼ*** may be understood as a (j-1)^{th} piece of channel information in the J pieces of channel information, a value range of j may be [0, (J-1)], j may be a positive integer, J may be a quantity of reference signals, and a dimension of **A*ⱼ*** is **N_{UE}** × **P_{CSI-RS,}*ₖ.* N_{UE}** may be a quantity of antenna ports used to receive a (j-1)^{th} reference signal by the terminal apparatus, and **P_{CSI-RS,j}** may be understood as a quantity of antenna ports in each port set corresponding to the (*j*-1)^{th} reference signal (in this example, when the (*j*-1)^{th} reference signal corresponds to a plurality of port sets, quantities of antenna ports in the plurality of port sets are equal). The X pieces of channel information ${H}_{x} = {\sum }_{j = 0}^{J - 1} {φ}_{x , j} {A}_{j}$ may be obtained based on the J pieces of channel information and information ***φₓ*** = [***φ*_{*x*,0},*φ*_{*x*,1}, ... , *φ*_{*x,J*-1}**]***^{T}*** (or represented as a row vector, and ***φₓ*** = [***φ*_{*x*,0},*φ*_{*x*,1}, ... , *φ*_{*x*,*J*-1}**]). Such a design is applied to the HBF architecture, so that the terminal apparatus can obtain more channel information when the network apparatus sends fewer reference signals. For example, the network apparatus may send one reference signal through a plurality of port sets respectively by using K groups of orthogonal analog weights, so that channel information corresponding to each of J port sets can be obtained. In addition, on the terminal apparatus, more than J pieces of channel information may be obtained through weighting (for example, ***φₓ*** may be equivalent to an analog beam) between analog port channels. In this manner, the terminal apparatus may further obtain encrypted beam channel information through measurement. The solution provided in embodiments of this application may also be applied to a digital beamforming architecture. Related content is similar to the foregoing content, and details are not described again.

In an implementation, ***φₓ*** may form a matrix (for example, each row represents a group of coefficients, or each column represents a group of coefficients). Further, the matrix may be a DFT matrix, a Hadamard matrix, a Walsh matrix, an identity matrix, or any other unitary matrix. In an implementation, at least one in the parameter *φₓ* (where x = 0, 1, ... , and (J - 1)) is obtained based on the configuration information of the network apparatus.

In a possible implementation, X may be further less than a quantity J of reference signals. In this case, it may also be understood as that the terminal apparatus obtains a small amount of channel information based on the J reference signals.

In this embodiment of this application, the channel information sent by the terminal apparatus to the network apparatus may be obtained by measuring a reference signal sent through one port set or a same reference signal sent through a plurality of port sets.

In another possible implementation, the channel information (for example, the channel information) sent by the terminal apparatus to the network apparatus may be obtained by measuring a plurality of reference signals. In other words, if one piece of channel information comes from two reference signals, the terminal apparatus respectively obtains two pieces of channel information based on the two reference signals, and then combines the two pieces of channel information into one piece of channel information based on a combining coefficient.

For example, the terminal apparatus obtains channel information #1 of a first reference signal sent through a first port set, and the terminal apparatus obtains channel information #2 of a second reference signal sent through a second port set. The channel information #1 and the channel information #2 correspond to a combining coefficient #1. The terminal apparatus may combine the channel information #1 and the channel information #2 based on the combining coefficient #1 to obtain channel information #3. The channel information #3 may be understood as channel information corresponding to the first reference signal sent through the first port set and the second reference signal sent through the second port set. The combining coefficient #1 indicates a weighting coefficient between a channel corresponding to the first port set and a channel corresponding to the second port set. The terminal apparatus may obtain the combining coefficient #1 based on the channel corresponding to the first port set and the channel corresponding to the second port set. Alternatively, the combining coefficient #1 is indicated by the network apparatus. This example may also be understood as an example in which the terminal apparatus combines the X groups of channel information to form the M groups of channel information.

In another possible implementation, the terminal apparatus may send information about the combining coefficient corresponding to the channel information to the network apparatus, so that the information about the combining coefficient is consistent between the network apparatus and the terminal apparatus, thereby obtaining good transmission performance. If understanding between the network apparatus and the terminal apparatus cannot be consistent, performance loss may be caused.

Step 704: The terminal apparatus sends the channel information to the network apparatus.

Correspondingly, the network apparatus receives the channel information.

For related content of step 704, refer to the related descriptions of step 602. For same parts, refer to each other. Details are not described again.

The channel information sent by the terminal apparatus may be channel information corresponding to a part of port sets or all ports of a same reference signal. For example, the network apparatus sends a first reference signal through two port sets. The terminal apparatus may measure the first reference signal sent through the two port sets to obtain channel information, and send the channel information to the network apparatus. The terminal apparatus may also measure the first reference signal sent through one of the two port sets, to obtain the channel information, and send the channel information to the network apparatus.

The channel information sent by the terminal apparatus may alternatively be channel information corresponding to a plurality of reference signals. For example, the terminal apparatus may send the channel information. The terminal apparatus may obtain the channel information corresponding to the plurality of (two or more) reference signals, and perform combination based on the obtained combining coefficient, to obtain the channel information corresponding to the plurality of reference signals. In this example, channel information corresponding to one reference signal may be channel information corresponding to all port sets corresponding to the reference signal, or may be channel information corresponding to a part of port sets corresponding to the reference signal.

The channel information (for example, the channel information) sent by the terminal apparatus may include a beam measurement report, and the report includes CSI. The CSI may include one or more of the following: an index of one or more resources, a CQI, reference signal received signal quality (reference signal received power, RSRP), a PMI, an RI, a layer indicator (layer indicator, LI), a CRI field, an SSB resource index (SSB resource index, SSBRI), and the like.

In an implementation, the terminal apparatus reports P pieces of channel information, where P may be an integer. P may be equal to M or may be less than M. For related content of M, refer to the related descriptions of step 703. Details are not described again. In this embodiment of this application, P may be equal to J, P may be less than J, or P may be greater than J. It should be understood that, P herein may alternatively be represented by one piece of channel information.

Further, the terminal apparatus reports information about P weighting parameters, where P may be a positive integer. The P weighting parameters correspond to the P pieces of channel information, that is, the P weighting parameters respectively correspond to P channel coefficients, and the P channel coefficients correspond to the P pieces of channel information. Specifically, the information about the P weighting parameters may be an index set {i₀, i₁, ... , i_{P-1}} of the weighting parameters, where iₚ = 0, 1, 2, ... , and (M - 1), iₚ may be an index of channel information that corresponds to a (p-1)^{th} channel coefficient in the P channel coefficients and that is in the M pieces of channel information (or the J pieces of channel information), and p = 0, 1, ... , and (P - 1).

It should be understood that, a part of terminal apparatuses may support the method in this embodiment, but a part of terminal apparatuses do not support the method in this embodiment. In this case, whether the terminal apparatus supports any reference signal receiving or channel information feedback manner in the foregoing process may be determined through capability information reported by the terminal apparatus. The network apparatus may determine, based on the capability information reported by the terminal apparatus, whether to configure the foregoing implementation.

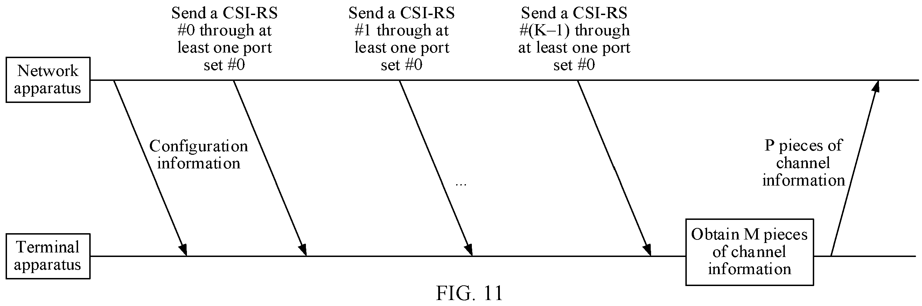

FIG. 11 shows an example of a possible diagram of a communication method according to an embodiment of this application. As shown in FIG. 11, a network apparatus sends configuration information, and then the network apparatus sends reference signals through a port set. For example, the network apparatus sends a CSI-RS #0 through at least one port set #0 (the CSI-RS #0 may correspond to one or more port sets. For ease of understanding, in this example, port sets used to send the CSI-RS #0 are all referred to as the port set #0, and related content of another reference signal is similar to this. Details are not described again). The network apparatus sends a CSI-RS #1 through at least one port set #1, and the network apparatus sends a CSI-RS #(J-1) through at least one port set #J, where j is a positive integer. A terminal apparatus calculates M groups of channel information, and then the terminal apparatus sends P groups of channel information to the network apparatus.

In a possible implementation, the channel information (for example, the channel information, where the channel information may be, for example, a CRI) sent by the terminal apparatus may include a PMI.

For example, a reference signal is denoted as #k (for example, may be denoted as a reference signal #k, or may be denoted as a resource #k of a reference signal), and a port set is denoted as #g (for example, may be denoted as a port set #g). One reference signal may be sent through one or more streams. For any stream corresponding to the reference signal #k sent through the port set #g, a PMI corresponding to the stream may be represented as *W*(*g*, *k*) , where *W*(*g*, *k*) = *Wₚ*(*g*, *k*) × *W*₁(*g*, *k*) × *W*₂(*g*, *k*) × *W*(*g*, *k*) , *F*(*g*, *k*) may be a part of rows (or columns) in an identity matrix (or a DFT matrix or an IDFT matrix) corresponding to the reference signal #k sent through the port set #g, *W*₁(*g*, *k*) is a first-level weight corresponding to the reference signal #k sent through the port set #g, *W*₂(*g*, *k*) is a second-level weight corresponding to the reference signal #k sent through the port set #g, and *Wₚ*(*g*, *k*) may be understood as a corresponding combining coefficient when channel information corresponding to the reference signal #k sent through the port set #g and other channel information are combined into one piece of channel information. In this embodiment of this application, W₁ may also be used to represent the first-level weight, W₂ may also be used to represent the second-level weight, and Wₚ may also be used to represent the combining coefficient.

In this embodiment of this application, first-level weights W₁ corresponding to any two pieces of channel information may be the same or may be different, and second-level weights W₂ corresponding to any two pieces of channel information may be the same or may be different. The first-level weight and/or the second-level weight may be set at a granularity of a port set. For example, one port set corresponds to one first-level weight and/or one second-level weight. Alternatively, the first-level weight and/or the second-level weight may be set at a granularity of a reference signal. For example, one reference signal corresponds to one first-level weight and/or one second-level weight. Alternatively, the first-level weight and/or the second-level weight may be set from a plurality of perspectives such as a port set and a reference signal. The following lists several possible examples.

Example 1: Corresponding first-level weights *W*₁ and corresponding second-level weights W₂ of all channel information (for example, the CRI) and/or all port sets are the same. For example, for all reference signals and port sets, values of *W*₁(*g*, *k*) corresponding to any two reference signals and any two port sets are the same, and values of *W*₂(*g*, *k*) corresponding to any two reference signals and any two port sets are the same. In this implementation, resource overhead may be low.

For example, in a possible implementation, a first-level weight W₁ corresponding to at least one of N_{g1} port sets (for example, each port set) is the same as a first-level weight W₁ corresponding to at least one of N_{g2} port sets (for example, each port set). In another possible implementation, a second-level weight W₂ corresponding to at least one of N_{g1} port sets is the same as a second-level weight W₂ corresponding to at least one of N_{g2} port sets.

Example 2: For each port set, the port set may be used to send one or more reference signals. A plurality of pieces of channel information sent by the terminal apparatus may correspond to a same port set. For each port set, the plurality of pieces of channel information corresponding to the port set may correspond to a same first-level weight *W*₁ and a same second-level weight *W*₂.

In Example 2, in another possible implementation, for two port sets, the two port sets may be used to send one or more reference signals. The two port sets may correspond to one or more pieces of channel information. When the two port sets correspond to two pieces of channel information, the two pieces of channel information corresponding to the two port sets may correspond to different first-level weights *W*₁ and different second-level weights *W*₂. For example, *W*₁(*g*, *k*) =*W*₁(g) and *W*₂(*g*, *k*) =*W*₂(g), where *W*₁(g) may be understood as first-level weights corresponding to all channel information corresponding to the port set #g, and *W*₂(g) may be understood as second-level weights corresponding to all channel information corresponding to the port set #g.

For example, a plurality of first-level weights W₁ corresponding to the first port set are the same, a plurality of second-level weights W₂ corresponding to the first port set are the same, at least one first-level weight W₁ corresponding to the first port set is different from at least one first-level weight W₁ corresponding to the second port set, and at least one second-level weight W₂ corresponding to the first port set is different from at least one second-level weight W₂ corresponding to the second port set.

Example 3: For each port set, the port set may be used to send one or more reference signals. A plurality of pieces of channel information sent by the terminal apparatus may correspond to a same port set. For each port set, the plurality of pieces of channel information corresponding to the port set may correspond to a same first-level weight *W*₁ and different second-level weights *W*₂. For example, *W*₁(*g*, *k*) =*W*₁(k), where *W*₁(k) may be understood as first-level weights corresponding to all channel information corresponding to the resource #k of the reference signal.

In Example 3, in another possible implementation, for two port sets, the two port sets may be used to send one or more reference signals. The two port sets may correspond to one or more pieces of channel information. When the two port sets correspond to two pieces of channel information, the two pieces of channel information corresponding to the two port sets may correspond to different first-level weights *W*₁ and different second-level weights *W*₂. For example, *W*₁(*g*, *k*) =*W*₁(g) and *W*₂(*g*, *k*) =*W*₂(g), where *W*₁(g) may be understood as first-level weights corresponding to all channel information corresponding to the port set #g, and *W*₂(g) may be understood as second-level weights corresponding to all channel information corresponding to the port set #g.

For example, a plurality of first-level weights W₁ corresponding to the first port set are the same, at least two second-level weights W₂ corresponding to the first port set are different, at least one first-level weight W₁ corresponding to the first port set is different from at least one first-level weight W₁ corresponding to the second port set, and at least one second-level weight W₂ corresponding to the first port set is different from at least one second-level weight W₂ corresponding to the second port set.

In another possible implementation, the channel information in this embodiment of this application may be sent in a plurality of manners. In this embodiment of this application, before sending feedback information, the terminal apparatus may first determine a sending manner corresponding to the channel information, and then send the channel information in the determined sending manner.

For example, in this embodiment of this application, the sending manner of the channel information may include a first sending manner and a second sending manner.

In the first sending manner, a codebook and/or a codebook parameter corresponding to the channel information fed back by the terminal apparatus may be determined based on a quantity (for example, a total quantity) of antenna ports corresponding to a resource of the reference signal corresponding to the channel information. If the channel information corresponds to a plurality of port sets, the plurality of port sets may use a same codebook and a same codebook parameter. A codebook parameter of one port set may include, for example, at least one of the following: a quantity of antenna ports in the port set, a non-zero element ratio, a basis selection ratio, and a quantity of bases (for example, a quantity of frequency domain bases).

For example, for different reference signal resources and/or different port sets, codebook parameters (for example, at least one of the following: a non-zero element ratio, a quantity of bases, and a basis selection ratio) corresponding to these reference signal resources or port sets may be the same, or it may be understood as that corresponding *W*₂(*g*, *k*) may be the same (for related content of *N*₃(*g*, *k*), refer to the related descriptions of Formula (3)). In another possible implementation, for different reference signal resources and/or different port sets, quantities of antenna ports corresponding to these reference signal resources or port sets may be the same.

In the second sending manner, a codebook and/or a codebook parameter corresponding to the channel information fed back by the terminal apparatus may be determined based on a quantity of antenna ports in each port set corresponding to the channel information. For example, a codebook parameter of one port set and a quantity of antenna ports in the port set are in a specific relationship, for example, a proportional relationship. If the channel information corresponds to a plurality of port sets, codebooks corresponding to at least two port sets may be different, and/or codebook parameters corresponding to the at least two port sets may be different. A codebook parameter of one port set may include, for example, at least one of the following: a quantity of antenna ports in the port set, a non-zero element ratio, a basis selection ratio, and a quantity of bases (for example, a quantity of frequency domain bases). For example, the codebook and/or the codebook parameter corresponding to the first port set are/is determined based on the quantity of antenna ports in the first port set. The codebook parameter corresponding to the first port set includes at least one of the following: the quantity of antenna ports in the first port set, and a non-zero element ratio, a basis selection ratio, and a quantity of bases that correspond to the first port set. The codebook and/or the codebook parameter corresponding to the second port set are/is determined based on the quantity of antenna ports in the second port set. The codebook parameter corresponding to the second port set includes at least one of the following: a quantity of antenna ports in the second port set, a non-zero element ratio corresponding to the second port set, and a basis selection ratio and a quantity of bases that correspond to the second port set.

In an implementation example, in the Release 16 (Release 16, R16), when the codebook corresponding to the channel information fed back by the terminal apparatus is a DFT-based codebook, a corresponding codebook parameter combination configuration (paramCombination) is shown in Table 2. In Table 2, L represents a quantity of bases selected for each polarization direction, p_{υ} represents each IDFT basis selection ratio, β represents a non-zero element ratio, and υ represents a rank.

**Table 2**

| Parameter combination | L | p_{υ} | | β |
|---|---|---|---|---|
| | | υ ∈ {1, 2} | υ ∈ {3, 4} | |
| 1 | 2 | 1/4 | 1/8 | 1/4 |
| 2 | 2 | 1/4 | 1/8 | 1/2 |
| 3 | 4 | 1/4 | 1/8 | 1/4 |
| 4 | 4 | 1/4 | 1/8 | 1/2 |
| 5 | 4 | 1/4 | 1/4 | 3/4 |
| 6 | 4 | 1/2 | 1/4 | 1/2 |
| 7 | 6 | 1/4 | - | 1/2 |
| 8 | 6 | 1/4 | - | 3/4 |

In another implementation example, in the R16, when the codebook corresponding to the channel information fed back by the terminal apparatus is a codebook selected based on a port, a corresponding codebook parameter combination configuration is shown in Table 3. In Table 3, L represents a quantity of bases selected for each polarization direction, p_{υ} represents each IDFT basis selection ratio, β represents a non-zero element ratio, and υ represents a rank.

**Table 3**

| Parameter combination | L | p_{υ} | | β |
|---|---|---|---|---|
| | | υ ∈ {1, 2} | υ ∈ {3, 4} | |
| 1 | 2 | 1/4 | 1/8 | 1/4 |
| 2 | 2 | 1/4 | 1/8 | 1/2 |
| 3 | 4 | 1/4 | 1/8 | 1/4 |
| 4 | 4 | 1/4 | 1/8 | 1/2 |
| 5 | 4 | 1/4 | 1/4 | 3/4 |
| 6 | 4 | 1/2 | 1/4 | 1/2 |

In this example of this application, the terminal apparatus can flexibly select the first sending manner and the second sending manner. In a possible implementation, the terminal apparatus may select a sending manner based on content of the channel information. The following describes selection solutions of two possible sending manner by using two examples. In this embodiment of this application, the first sending manner may also be referred to as a first feedback manner, and the second sending manner may also be referred to as a second feedback manner. The sending manner corresponding to the channel information in this embodiment of this application is mainly associated with selection of a codebook and/or a codebook parameter corresponding to the channel information.

Example 1: If the channel information fed back by the terminal apparatus corresponds to a resource of a same reference signal, and the channel information is obtained by measuring one reference signal sent through one or more port sets, the terminal apparatus may use the first sending manner.

In a possible implementation, in cases other than a case, described in Example 1, in which the first sending manner is selected, the terminal apparatus may use the second sending manner.

For example, the channel information fed back by the terminal apparatus corresponds to resources of a plurality of reference signals (for example, the channel information fed back by the terminal apparatus), that is, the channel information is obtained by measuring the plurality of reference signals. In this case, the terminal apparatus may use the second sending manner. In this implementation, the channel information corresponds to a plurality of port sets, and a codebook and a codebook parameter that correspond to the channel information fed back by the terminal apparatus may be respectively determined based on a quantity of antenna ports in each port set. For example, the codebook corresponding to the first port set is different from the codebook corresponding to the second port set; and/or the codebook parameter corresponding to the first port set is the same as the codebook parameter corresponding to the second port set. In another possible implementation, the codebook parameter corresponding to the first port set may also be different from the codebook parameter corresponding to the second port set.

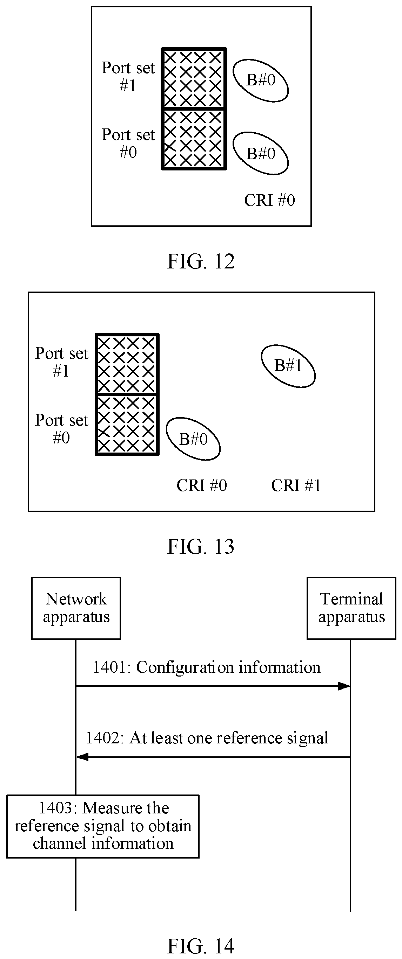

FIG. 12 shows an example of a possible diagram of a port set on a network apparatus according to an embodiment of this application. As shown in FIG. 12, the network apparatus sends a same reference signal, for example, a CSI-RS #0, through a port set #0 and a port set #1. The port set #0 and the port set #1 correspond to a beam B#0. A terminal apparatus performs measurement based on the CSI-RS #0 sent through the port set #0 and the port set #1, to obtain a CRI #0. The terminal apparatus feeds back the CRI #0. Because the CRI #0 is from a same reference signal, a sending manner corresponding to the CRI #0 is a first sending manner. For example, a codebook corresponding to the CRI #0 is a DFT codebook, and a dimension of a first-level weight W₁ corresponding to the CRI #0 may be represented as, for example, 2(Q₁+Q₂)*2L, where L is a quantity of bases selected for each polarization direction, Q₁ may be understood as a quantity of antenna ports in the port set #0, and Q₂ may be understood as a quantity of antenna ports in the port set #1. In this embodiment of this application, Q₁ may be a positive integer, and Q₂ may be a positive integer.

Example 2: If channel information fed back by the terminal apparatus corresponds to a resource of a same reference signal, the channel information is obtained by measuring one reference signal sent through a plurality of port sets, and spatial relations of resources of reference signals corresponding to the plurality of port sets are the same, the terminal apparatus may use the first sending manner.

In Example 2, in another possible implementation, if channel information fed back by the terminal apparatus corresponds to resources of a plurality of reference signals with a same analog beam or resources of a plurality of reference signals with a same spatial relation, the terminal apparatus may use the first sending manner.

In a possible implementation, in cases other than a case, described in Example 2, in which the first sending manner is selected, the terminal apparatus may use a second sending manner.

For example, the channel information fed back by the terminal apparatus corresponds to resources of a plurality of reference signals (for example, the channel information fed back by the terminal apparatus), that is, the channel information is obtained by measuring the plurality of reference signals. In this case, the terminal apparatus may use the second sending manner. In this implementation, the channel information corresponds to a plurality of port sets, and a codebook and a codebook parameter that correspond to the channel information fed back by the terminal apparatus may be respectively determined based on a quantity of antenna ports in each port set. For example, a codebook corresponding to a first port set is different from a codebook corresponding to a second port set; and/or a codebook parameter corresponding to a first port set is the same as a codebook parameter corresponding to a second port set. In another possible implementation, a codebook parameter corresponding to a first port set may also be different from a codebook parameter corresponding to a second port set.

FIG. 13 shows an example of a possible diagram of a port set on a network apparatus according to an embodiment of this application. As shown in FIG. 13, the network apparatus sends a CSI-RS #0 through a port set #0, the port set #0 corresponds to a beam B#0, the network apparatus sends a CSI-RS #1 through a port set #1, and the port set #1 corresponds to a beam B#1. A terminal apparatus performs measurement based on the CSI-RS #0 sent through the port set #0, to obtain a CRI #0. The terminal apparatus performs measurement based on the CSI-RS #1 sent through the port set #1, to obtain a CRI #1. The terminal apparatus feeds back channel information corresponding to the CRI #0 and the CRI #1. Because the channel information corresponding to the CRI #0 and the CRI #1 is from two reference signals, a sending manner corresponding to the channel information corresponding to the CRI #0 and the CRI #1 is a second sending manner. In this case, a codebook corresponding to the CRI #0 may be a DFT codebook, and a dimension of a first-level weight W₁ corresponding to the CRI #0 may be 2Q₁*2L₁. A codebook corresponding to the CRI #1 may be a DFT codebook, and a dimension of a first-level weight W₁ corresponding to the CRI #1 may be 2Q₂*2L₂. L₁ is a quantity of bases selected in each polarization direction and corresponding to the port set #0, L₂ is a quantity of bases selected in each polarization direction and corresponding to the port set #1, Q₁ may be understood as a quantity of antenna ports in the port set #0, and Q₂ may be understood as a quantity of antenna ports in the port set #1. Two DFT codebooks corresponding to the CRI #0 and the CRI #1 may be different.

It can be learned from the solution provided in FIG. 7 that, in the solution provided in this embodiment of this application, the network apparatus can reduce a quantity of reference signals, and then reduce resources allocated to the reference signals. In this case, the terminal apparatus also has a capability of feeding back more channel information. For example, the terminal apparatus may feed back channel information corresponding to resources of a plurality of reference signals. This solution can further reduce resource overhead.

According to the method provided in this embodiment of this application, configuration of excessive resource sets and corresponding reporting configurations can be avoided, and a flexible and dynamic measurement manner is supported. In particular, dynamic sharing measurement can be implemented at a low cost in a multi-user scenario.

Based on the embodiments shown in FIG. 1A, FIG. 1B, FIG. 1C, FIG. 2, FIG. 3, FIG. 4A, FIG. 4B, FIG. 5, FIG. 6, FIG. 7, FIG. 8A(a) to FIG. 8A(d), FIG. 8B(a) to FIG. 8B(d), FIG. 9a to FIG. 9c, FIG. 10a and FIG. 10b, FIG. 11, FIG. 12, or FIG. 13, FIG. 14 shows an example of a possible schematic flowchart of a communication method according to an embodiment of this application. The solution provided in FIG. 14 may be considered as an extended embodiment of the solution provided in FIG. 6. The embodiment provided in FIG. 14 is similar to the embodiment provided in FIG. 7, and a difference lies in that in FIG. 7, an example in which a network apparatus sends a downlink reference signal and a terminal apparatus sends channel information to the network apparatus is used for description, and in FIG. 14, an example in which a terminal apparatus sends an uplink reference signal and a network apparatus obtains channel information based on the reference signal is used for description. In the example in FIG. 14, an example in which a second apparatus is the terminal apparatus and a first apparatus is the network apparatus is used for description. In the solution provided in FIG. 14, the terminal apparatus may also be replaced with the second apparatus, and the network apparatus may also be replaced with the first apparatus. For descriptions of the terminal apparatus and the network apparatus in FIG. 14, refer to the foregoing descriptions in FIG. 6. Details are not described again.

The following provides descriptions with reference to FIG. 14.

Step 1401: The network apparatus sends configuration information to the terminal apparatus.

Correspondingly, the terminal apparatus receives the configuration information.

For example, in step 1401, the network apparatus may configure channel information measurement configuration information (information A1) for the terminal apparatus. For example, the network apparatus may configure a resource of the uplink reference signal for the terminal apparatus, and may further configure a port set used to send the uplink reference signal. These port sets may be port sets on the terminal apparatus. Alternatively, the terminal apparatus determines a port set used to send these uplink reference signals, for example, determines a port set corresponding to each reference signal.

For step 1401, refer to step 701. A difference lies in that the resource of the reference signal that is configured based on the configuration information is the resource of the uplink reference signal, and the resource of the reference signal that is configured based on the configuration information in step 701 may be understood as a resource of a downlink reference signal. For related content of this step, refer to the foregoing descriptions. Details are not described herein again.

Step 1402: The terminal apparatus sends at least one reference signal.

Correspondingly, the network apparatus receives the at least one reference signal.

In step 1402, the at least one reference signal sent by the terminal apparatus may be understood as the uplink reference signal. Content of the uplink reference signal is similar to content of the downlink reference signal in step 702, and the terminal apparatus may also send the uplink reference signal through one or more port sets. For an example of the uplink reference signal, refer to the foregoing related descriptions.

For step 1402, refer to related content in step 702. For example, the terminal apparatus may send reference signals in time division manner.

Step 1403: The network apparatus measures the reference signal to obtain channel information.

For a manner in which the network apparatus obtains the channel information in step 1403, refer to the manner in which the terminal apparatus obtains the channel information in step 703. For example, the network apparatus may measure a same reference signal from one or more port sets, to obtain the channel information. Alternatively, the network apparatus may obtain channel information corresponding to resources of a plurality of reference signals. For example, the network apparatus determines the channel information based on a resource of a first reference signal corresponding to a first port set and a resource of a second reference signal corresponding to a second port set. For related content, refer to the foregoing descriptions. Details are not described again.

In this embodiment of this application, after obtaining the channel information, the network apparatus may further send the channel information to the terminal apparatus, so that the terminal apparatus obtains the uplink channel information.

It can be learned from the solution provided in FIG. 14 that, in the solution provided in this embodiment of this application, a quantity of reference signals may also be reduced on the terminal apparatus, to reduce resources allocated to the reference signals, and further reduce resource overhead.

According to the method provided in embodiments of this application, for example, the solutions provided in FIG. 6, FIG. 7, and FIG. 14, configuration of excessive resource sets and corresponding reporting configurations can be avoided, and a flexible and dynamic measurement manner is supported. In particular, dynamic sharing measurement can be implemented at a low cost in a multi-user scenario.

It may be understood that, to implement the functions in the foregoing embodiments, the first apparatus and the second apparatus may include corresponding hardware structures and/or software modules for performing the functions. A person skilled in the art should be easily aware that, in this application, units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

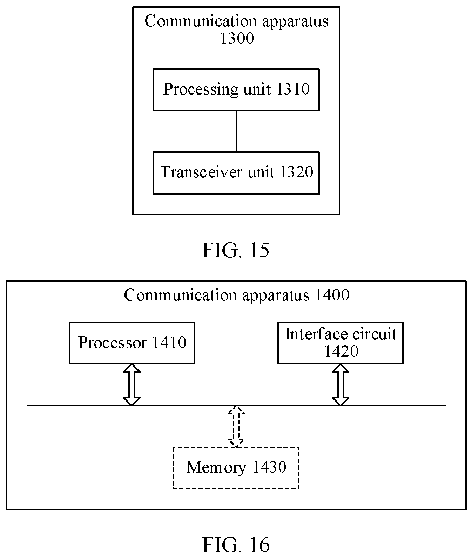

Based on a same concept, FIG. 15 and FIG. 16 are possible diagrams of a structure of a communication apparatus according to an embodiment of this application. These communication apparatuses may be configured to implement the functions of the first apparatus or the second apparatus in the foregoing method embodiments, and therefore can also achieve the beneficial effects of the foregoing method embodiments. In embodiments of this application, the communication apparatus may be the terminal device shown in FIG. 2 or FIG. 3, or may be the network device (for example, the RAN node) shown in FIG. 2 or FIG. 3, or may be a chip system used in the terminal device or the network device shown in FIG. 2 or FIG. 3.

As shown in FIG. 15, a communication apparatus 1300 includes a processing unit 1310 and a transceiver unit 1320. The communication apparatus 1300 is configured to implement functions of the first apparatus or the second apparatus in the method embodiment shown in FIG. 6, FIG. 7, or FIG. 14. The transceiver unit 1320 may also be referred to as a communication unit. The transceiver unit 1320 may include a sending unit and a receiving unit.

When the communication apparatus 1300 is configured to implement functions of the first apparatus or the second apparatus in the method embodiment shown in FIG. 6, the transceiver unit 1320 may perform step 601 and step 602. When the communication apparatus 1300 is configured to implement functions of the first apparatus (for example, the terminal apparatus) in the method embodiment shown in FIG. 7, the processing unit 1310 may perform step 703, and the transceiver unit 1320 may perform step 701, step 702, and step 704. When the communication apparatus 1300 is configured to implement functions of the second apparatus (for example, the network apparatus) in the method embodiment shown in FIG. 7, the transceiver unit 1320 may perform step 701, step 702, and step 704. When the communication apparatus 1300 is configured to implement functions of the first apparatus (for example, the network apparatus) in the method embodiment shown in FIG. 14, the processing unit 1310 may perform step 1403, and the transceiver unit 1320 may perform step 1401 and step 1402. When the communication apparatus 1300 is configured to implement functions of the second apparatus (for example, the terminal apparatus) in the method embodiment shown in FIG. 14, the transceiver unit 1320 may perform step 1401 and step 1402.

When the communication apparatus 1300 is configured to implement functions of the first apparatus in the method embodiment shown in FIG. 6, FIG. 7, or FIG. 14, in a possible implementation, the receiving unit is configured to receive a first reference signal and a second reference signal. The sending unit is configured to send channel information.

When the communication apparatus 1300 is configured to implement functions of the first apparatus in the method embodiment shown in FIG. 6, FIG. 7, or FIG. 14, in a possible implementation, the processing unit 1310 is configured to: obtain first channel information based on a resource corresponding to a first reference signal and a first port set; obtain second channel information based on a resource corresponding to a second reference signal and a second port set; and determine channel information based on the first channel information and the second channel information.

When the communication apparatus 1300 is configured to implement functions of the first apparatus in the method embodiment shown in FIG. 6, FIG. 7, or FIG. 14, in a possible implementation, the processing unit 1310 is configured to: determine a combining coefficient; and combine the first channel information and the second channel information based on the combining coefficient to obtain channel information.

When the communication apparatus 1300 is configured to implement functions of the first apparatus in the method embodiment shown in FIG. 6, FIG. 7, or FIG. 14, in a possible implementation, the receiving unit is configured to receive configuration information. Alternatively, the sending unit is configured to send configuration information.

When the communication apparatus 1300 is configured to implement functions of the first apparatus in the method embodiment shown in FIG. 6, FIG. 7, or FIG. 14, in a possible implementation, the sending unit is configured to send the channel information based on the configuration information.

When the communication apparatus 1300 is configured to implement functions of the first apparatus in the method embodiment shown in FIG. 6, FIG. 7, or FIG. 14, in a possible implementation, the processing unit 1310 is configured to determine a sending manner corresponding to the channel information; and the sending unit is configured to send the channel information in the sending manner.

When the communication apparatus 1300 is configured to implement functions of the second apparatus in the method embodiment shown in FIG. 6, FIG. 7, or FIG. 14, in a possible implementation, the sending unit is configured to send the first reference signal and the second reference signal. The receiving unit is configured to receive the channel information.

When the communication apparatus 1300 is configured to implement functions of the second apparatus in the method embodiment shown in FIG. 6, FIG. 7, or FIG. 14, in a possible implementation, the receiving unit is configured to receive configuration information. Alternatively, the sending unit is configured to send configuration information.

For more detailed descriptions of the processing unit 1310 and the transceiver unit 1320, refer to the related descriptions in the method embodiment shown in FIG. 6, FIG. 7, or FIG. 14.

As shown in FIG. 16, a communication apparatus 1400 includes a processor 1410 and an interface circuit 1420. The processor 1410 and the interface circuit 1420 are coupled to each other. It may be understood that, the interface circuit 1420 may be a transceiver or an input/output interface. The transceiver includes a transmitter and a receiver. The transmitter may be configured to send information, the receiver may be configured to receive the information, and another function may be implemented by the processor. The input/output interface is configured to input and/or output information. Output may be understood as sending, input may be understood as receiving, and another function may be implemented by the processor. Optionally, the communication apparatus 1400 may further include a memory 1430 configured to: store instructions to be executed by the processor 1410, store input data required by the processor 1410 to run the instructions, or store data generated after the processor 1410 runs the instructions.

When the communication apparatus 1400 is configured to implement the method shown in FIG. 6, FIG. 7, or FIG. 14, the processor 1410 is configured to implement a function of the processing unit 1310, and the interface circuit 1420 is configured to implement a function of the transceiver unit 1320.

When the communication apparatus is a chip used in a terminal, the chip in the terminal implements the function of the terminal apparatus in the foregoing method embodiment. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements the function of the network apparatus in the foregoing method embodiment. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by these modules.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entity A and the entity B herein each may be a RAN node or a terminal, or may be a module in the RAN node or the terminal. Information sending and receiving may be information exchange between the RAN node and the terminal, for example, information exchange between the base station and the terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in the ASIC. In addition, the ASIC may be located in the base station or the terminal. Certainly, the processor and the storage medium may exist in the base station or the terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" typically represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that, various numbers (for example, numeral numbers "first" and "second" and letter numbers "A1 and A2" and "B1 and B2") in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

## Claims

1. A communication method, wherein the method is applied to a first apparatus, and the method comprises:
receiving a first reference signal and a second reference signal, wherein the first reference signal corresponds to a first port set, the second reference signal corresponds to a second port set, the first port set comprises at least one antenna port, and the second port set comprises at least one antenna port; and
sending channel information, wherein the channel information is determined based on the first reference signal sent through the first port set and the second reference signal sent through the second port set.

2. A communication method, wherein the method is applied to a second apparatus, and the method comprises:
sending a first reference signal and a second reference signal, wherein the first reference signal corresponds to a first port set, the second reference signal corresponds to a second port set, the first port set comprises at least one antenna port, and the second port set comprises at least one antenna port; and
receiving channel information, wherein the channel information is determined based on the first reference signal sent through the first port set and the second reference signal sent through the second port set.

3. The method according to claim 1 or 2, wherein the channel information is determined based on first channel information and second channel information, the first channel information is determined based on the first reference signal corresponding to the first port set, and the second channel information is determined based on the second reference signal corresponding to the second port set.

4. The method according to claim 3, wherein the channel information is further determined based on a combining coefficient, and the combining coefficient is determined based on the first reference signal corresponding to the first port set and the second reference signal corresponding to the second port set.

5. The method according to any one of claims 1 to 4, wherein
the first port set belongs to N_{g1} port sets, N_{g1} is a positive integer, and the first reference signal further corresponds to the N_{g1} port sets; and
the second port set belongs to N_{g2} port sets, N_{g2} is a positive integer, and the second reference signal further corresponds to the N_{g2} port sets.

6. The method according to any one of claims 1 to 5, wherein before sending the channel information, the method further comprises:
receiving or sending configuration information, wherein the configuration information comprises at least one of the following:
indication information of the first reference signal;
indication information of the first port set;
indication information of the second reference signal; and
indication information of the second port set.

7. The method according to claim 6, wherein the indication information of the first port set comprises at least one of the following: index information of an antenna port in the first port set, index information of the first port set, index information of a start antenna port in the first port set, information about a quantity of antenna ports comprised in the first port set, and index information of an end antenna port in the first port set; and
the indication information of the second port set comprises at least one of the following: index information of an antenna port in the second port set, index information of the second port set, index information of a start antenna port in the second port set, information about a quantity of antenna ports comprised in the second port set, and index information of an end antenna port in the second port set.

8. The method according to any one of claims 1 to 7, wherein a sending manner of the channel information is associated with a quantity of reference signals corresponding to the channel information; or
a sending manner of the channel information is associated with a quantity of reference signals corresponding to the channel information and a spatial relation of the reference signals corresponding to the channel information.

9. The method according to any one of claims 1 to 8, wherein a codebook and/or a codebook parameter corresponding to the first port set are/is determined based on the quantity of antenna ports in the first port set; and the codebook parameter corresponding to the first port set comprises at least one of the following: the quantity of antenna ports in the first port set, a non-zero element ratio corresponding to the first port set, a basis selection ratio corresponding to the first port set, and a quantity of bases corresponding to the first port set; and
a codebook and/or a codebook parameter corresponding to the second port set are/is determined based on the quantity of antenna ports in the second port set; and the codebook parameter corresponding to the second port set comprises at least one of the following: the quantity of antenna ports in the second port set, a non-zero element ratio corresponding to the second port set, a basis selection ratio corresponding to the second port set, and a quantity of bases corresponding to the second port set.

10. The method according to any one of claims 1 to 9, wherein the codebook corresponding to the first port set is different from the codebook corresponding to the second port set; and/or
the codebook parameter corresponding to the first port set is the same as the codebook parameter corresponding to the second port set.

11. A communication apparatus, comprising a module configured to perform the method according to any one of claims 1 to 10.

12. A communication apparatus, comprising a processor, wherein the processor implements the method according to any one of claims 1 to 10 by using a logic circuit or by executing a computer program or instructions.

13. A computer-readable storage medium, wherein the storage medium stores a computer program or instructions; and when the computer program or the instructions are executed by a communication apparatus, the method according to any one of claims 1 to 10 is implemented.
